# EUROPÄISCHE PATENTSCHRIFT

(11) **EP 3 511 212 B1**
(45) Veröffentlichungstag und Bekanntmachung des Hinweises auf die Patenterteilung: **10.07.2024**
(21) Anmeldenummer: 19151655.8
(22) Anmeldetag: 14.01.2019
(51) Int. Cl.: B60S 3/00, F26B 1/00

(54) **BEHANDLUNGSANLAGE UND VERFAHREN ZUM BEHANDELN VON WERKSTÜCKEN**
TREATMENT APPARATUS AND METHOD FOR TREATING OBJECTS
APPAREIL DE TRAITEMENT ET PROCÉDÉ DE TRAITEMENT DE PIÈCES

(30) Priorität: 15.01.2018 DE 102018100719; 15.02.2018 DE 102018103454
(43) Veröffentlichungstag der Anmeldung: 17.07.2019
(73) Patentinhaber: Eisenmann GmbH, 71032 Böblingen (DE)
(72) Erfinder: Schulze, Herbert, 71134 Aidlingen (DE)
(74) Vertreter: Ostertag & Partner Patentanwälte mbB

(56) Entgegenhaltungen:
- DE-A1- 102015 006 098
- DE-U1- 202017 106 843
- JP-U- H04 118 168
- US-A- 4 691 640

## Beschreibung

Die Erfindung betrifft eine Behandlungsanlage zum Behandeln von Werkstücken, insbesondere zum Beschichten und/oder Trocknen von Fahrzeugkarosserien, mit
a) einer Behandlungseinrichtung mit einem Gehäuse, in dem ein Behandlungstunnel untergebracht ist;
b) einem Fördersystem, welches eine Vielzahl von Transportwagen umfasst, mittels denen die Werkstücke durch den Behandlungstunnel förderbar sind, wobei jeder Transportwagen ein Fahrwerk und eine Befestigungseinrichtung für zumindest ein Werkstück umfasst, die mittels einer Verbindungseinrichtung miteinander gekoppelt sind;
   wobei
c) außerhalb des Behandlungstunnels ein Führungsbereich mit einem Fahrraum für das Fahrwerk vorhanden ist.

Außerdem betrifft die Erfindung ein Verfahren zum Behandeln von Werkstücken, insbesondere zum Beschichten und/oder Trocknen von Fahrzeugkarosserien, umfassend das Hindurchführen von Werkstücken durch einen Behandlungstunnel mittels eines Fördersystems, welches eine Vielzahl von Transportwagen umfasst, mittels denen die Werkstücke durch den Behandlungstunnel gefördert werden, wobei jeder Transportwagen ein Fahrwerk und eine Befestigungseinrichtung für zumindest ein Werkstück umfasst, die mittels einer Verbindungseinrichtung miteinander gekoppelt sind, und wobei außerhalb des Behandlungstunnels ein Führungsbereich mit einem Fahrraum für das Fahrwerk vorhanden ist.

In einer solchen Behandlungsanlage können Behandlungseinrichtungen insbesondere in Form von Beschichtungskabinen oder Trocknern vorhanden sein. In Beschichtungskabinen werden die Werkstücke mit einer Beschichtung versehen und beispielsweise lackiert; der Behandlungstunnel ist in diesem Fall ein Beschichtungstunnel bzw. ein Lackiertunnel. Bei einem Trockner ist der Behandlungstunnel entsprechend ein Trockentunnel.

Behandlungseinrichtungen können auch in Form von Montageeinrichtungen und/oder Kontrolleinrichtungen vorhanden sein, in denen die Werkstücke montiert oder an den Werkstücken Montagearbeiten vorgenommen werden bzw. in denen die Werkstücke im laufenden Produktionsprozess kontrolliert werden.

Bei solchen Behandlungseinrichtungen gibt es in einer Tunnelwand, welche den Behandlungstunnel von dem Führungsbereich trennt, entsprechend einen Verbindungsdurchgang, durch welchen sich zumindest die Verbindungseinrichtung eines Transportwagens hindurch erstreckt. Als eine Tunnelwand ist jede Begrenzung des Behandlungstunnels zu verstehen, dazu zählen also nicht nur Seitenwände, sondern auch eine Decke oder ein Boden.

Durch einen solchen Verbindungsdurchgang kann es zu einem Übertreten der Atmosphäre des Behandlungstunnels in den Fahrraum kommen. Insbesondere bei Trocknern ist diese Atmosphäre mit Lösemittel belastet, welches dann in dem in der Regel kühleren Fahrraum auskondensieren und sich auf den Komponenten der Fördertechnik in dem Fahrraum niederschlagen kann. Dies greift jedoch das Fördersystem an.

Eine Behandlungsanlage und ein Verfahren der eingangs genannten Art sind in der DE 10 2015 006 098 A1 beschrieben, welche einen Trockner für Fahrzeugkarosserien offenbart. Dort sind Abschirmmittel vorgeschlagen, welche ein Übertreten von Tunnelatmosphäre in den Fahrraum zumindest verringern können.

Die DE 20 2017 106 843 U1 schlägt bei einer Behandlungsanlage und einem Verfahren der eingangs genannten Art vor, dem Fahrraum ein Gas zuzuführen, so dass stets Gas aus dem Fahrraum in den Behandlungstunnel strömt und nicht umgekehrt. Dies hat jedoch den beträchtlichen Nachteil, dass auf diese Weise Verunreinigungen aus dem Fahrraum in den Behandlungstunnel eingeschleppt werden. Bei solchen Verunreinigungen handelt es sich insbesondere um Abrieb oder Schmiermitteln der Komponenten des Fördersystems in dem Fahrraum. Wenn der Fahrraum kein gesondertes Gehäuse hat, können auch andere Verunreinigungen aus der Hallenluft der Anlage mit in den Behandlungstunnel eingetragen werden. Die Behandlung der Werkstücke in dem Behandlungstunnel kann durch solche Verunreinigungen jedoch stark gestört werden. Die DE 20 2017 106 843 U1 schlägt vor, dass der Fahrraum ein eigenes Gehäuse hat und diesem ein Gas unter Überdruck zugeführt wird. Aber auch dann müssen verhältnismäßig große Gasvolumina bewegt werden. Außerdem müssen an den Enden des Fahrraum Schleusen vorgesehen sein, um den Druck in dem Fahrraum auch beim Ein- und Ausfahren der Transportwagen aufrechtzuerhalten; diese Schleusen sind jedoch allein wegen des notwendigen Querschnitts des Fahrraums bauaufwendig. Auch JP H04 118168 U offenbart ein Trockner mit einem Gehäuse in dem ein Behandlungstunnel unterbracht ist, der durch Seitenwände, eine Decke sowie einen Boden begrenzt ist.

Es ist daher Aufgabe der Erfindung, eine Behandlungsanlage und ein Verfahren der eingangs genannten Art bereitzustellen, welche diesen Gedanken Rechnung tragen.

Diese Aufgabe wird bei einer Behandlungsanlage der eingangs genannten Art dadurch gelöst, dass
d) in dem Führungsbereich ein Gasraum ausgebildet ist, der zwischen dem Fahrraum und dem Behandlungstunnel angeordnet und durch ein gesondertes Gehäuse begrenzt ist;
e) eine Gas-Versorgungseinrichtung vorhanden ist, mittels welcher dem Gasraum ein Gas derart zuführbar ist, dass in dem Gasraum eine Gasbarriere zwischen dem Behandlungstunnel und dem Fahrraum erzeugt wird.

Erfindungsgemäß wird somit zwischen dem Fahrraum und dem Behandlungstunnel eine Gasbarriere in einem gesonderten Gehäuse ausgebildet. Auf diese Weise kann ein Schutz in beide Richtungen erreicht werden, so dass es in keiner Richtung zwischen dem Behandlungstunnel und dem Fahrraum zu einem Atmosphärenübergang kommen kann. Zudem kann das Volumen des Gasraumen beträchtlich kleiner als der Fahrraum bleiben, wodurch auch eine erforderliche Schleusentechnik weniger aufwendig ausgebildet sein kann.

Es ist besonders günstig, wenn der Gasraum über einen ersten Verbindungsdurchgang mit dem Behandlungstunnel und über einen zweiten Verbindungsdurchgang mit dem Fahrraum verbunden ist, derart, dass das Fahrwerk eines Transportwagens in dem Fahrraum bewegbar ist und dabei die Befestigungseinrichtung im Behandlungstunnel mitgeführt wird und sich die Verbindungseinrichtung durch den ersten und den zweiten Verbindungsdurchgang und den Gasraum hindurch erstreckt. Auf diese Weise ist die Verbindungseinrichtung in dem Gasraum stets von dem dortigen Gas umspült.

Vorzugsweise sind der erste Verbindungsdurchgang und/oder der zweite Verbindungsdurchgang geradlinig oder gewinkelt.

Wenn mittels der Gas-Versorgungseinrichtung in dem Gasraum ein Druck erzeugbar ist, der gegenüber dem Druck im Behandlungstunnel und/oder gegenüber dem Druck im Fahrraum erhöht ist, kann zuverlässig sichergestellt werden, dass Tunnelatmosphäre und/oder Fahrraumatmosphäre nicht in den Gasraum eintreten kann. Vorzugsweise ist der Druck in jedem Fall gegenüber dem Druck in dem Behandlungstunnel erhöht. Wenn der Druck in dem Gasraum sowohl gegenüber dem Druck im Behandlungstunnel als auch gegenüber dem Druck im Fahrraum erhöht ist, ist ein Überströmen von ungewünschten Atmosphären sicher verhindert.

Vorteilhaft ist der Gasraum als Durchströmungsraum ausgebildet, wobei das Gasraum-Gehäuse zu diesem Zweck einen oder mehrere Gaseinlässe und einen oder mehrere Gasauslässe umfasst.

Die Gas-Versorgungseinrichtung ist dabei bevorzugt derart eingerichtet, dass dem Gasraum durch einen oder mehrere Gaseinlässe Gas für die Gasbarriere zugeführt wird, welches den Gasraum auf einem Strömungsweg durchströmt und dabei in dem Gasraum zumindest zum Teil und zumindest bereichsweise an dem ersten Verbindungsdurchgang und/oder an dem zweiten Verbindungsdurchgang vorbei strömt und hiernach durch einen oder mehrere Gasauslässe von dem Gasraum abgeführt wird.

Es ist günstig, wenn die Gasbarriere über die volle Längserstreckung des ersten Verbindungsdurchgangs und/oder des zweiten Verbindungsdurchgangs zumindest zum Teil an diesen vorbei strömt.

Um die Strömungsgeschwindigkeit an dem oder den Verbindungsdurchgängen zu erhöhen, kann der Gasraum vorteilhaft eine Strömungsleiteinrichtung umfassen, mittels welcher der Strömungsquerschnitt für die Gasbarriere verringert wird, bevor Gas der Gasbarriere an dem ersten Verbindungsdurchgang und/oder dem zweiten Verbindungsdurchgang vorbeiströmt.

Dies kann auf günstige Weise erreicht werden, indem die Strömungsleiteinrichtung Strömungsleitelemente umfasst.

Es kann von Vorteil sein, wenn der Gasraum derart eingerichtet ist, dass dieser im Gegenstromprinzip von der Gasbarriere durchströmbar ist, so dass Gas der Gasbarriere an dem ersten Verbindungsdurchgang und an dem zweiten Verbindungsdurchgang mit entgegengesetzten Strömungsrichtungen vorbei strömt.

Es ist günstig, wenn die Gas-Versorgungseinrichtung eine Konditioniereinrichtung umfasst, mittels welcher das dem Gasraum zuzuführende Gas konditioniert werden kann. Vorzugsweise wird das Gas auf die Atmosphäre im Behandlungstunnel abgestimmt, insbesondere bezogen auf die Temperatur und die Feuchtigkeit.

Fördertechnisch ist es von Vorteil, wenn der Führungsbereich mit dem Fahrraum und dem Gasraum unterhalb eines Tunnelbodens des Behandlungstunnels ausgebildet ist. Dies trägt dem Wunsch nach etablierten bodengebunden Fördersystemen Rechnung.

Eine konstruktiv unkomplizierte Verbindungseinrichtung umfasst wenigstens eine vertikale Strebe, insbesondere eine Gelenkstrebe. Eine Gelenkstrebe kann dann wünschenswert sein, wenn die Transportwagen des Fördersystems kurvengängig sein sollen; hierauf wird weiter unten nochmals eingegangen.

Die oben genannten Aufgabe wird bei einem Verfahren der eingangs genannten Art dadurch gelöst, dass
einem Gasraum, der in dem Führungsbereich zwischen dem Fahrraum und dem Behandlungstunnel angeordnet und durch ein gesondertes Gehäuse begrenzt ist, ein Gas derart zugeführt wird, dass in dem Gasraum eine Gasbarriere zwischen dem Behandlungstunnel und dem Fahrraum erzeugt wird.

Die Vorteile hierzu und zu den nachstehend erläuterten Verfahrensschritten entsprechen sinngemäß den Vorteilen, die oben zu entsprechenden Merkmalen der Behandlungsanlage erläutert wurden.

Es ist entsprechend vorteilhaft, wenn der Gasraum über einen ersten Verbindungsdurchgang mit dem Behandlungstunnel und über einen zweiten Verbindungsdurchgang mit dem Fahrraum verbunden ist, wobei das Fahrwerk eines Transportwagens in dem Fahrraum bewegt wird und dabei die Befestigungseinrichtung im Behandlungstunnel mitgeführt wird und sich die Verbindungseinrichtung durch den ersten und den zweiten Verbindungsdurchgang und den Gasraum hindurch erstreckt.

Vorzugsweise wird in dem Gasraum ein Druck erzeugt, der gegenüber dem Druck im Behandlungstunnel und/oder gegenüber dem Druck im Fahrraum erhöht ist.

Der Gasraum ist bevorzugt als Durchströmungsraum ausgebildet, wobei das Gasraum-Gehäuse zu diesem Zweck einen oder mehrere Gaseinlässe und einen oder mehrere Gasauslässe umfasst.

Vorteilhaft wird dem Gasraum durch einen oder mehrere Gaseinlässe Gas für die Gasbarriere zugeführt, welches den Gasraum auf einem Strömungsweg durchströmt und dabei in dem Gasraum zumindest zum Teil und zumindest bereichsweise an dem ersten Verbindungsdurchgang und/oder an dem zweiten Verbindungsdurchgang vorbei strömt und hiernach durch einen oder mehrere Gasauslässe von dem Gasraum abgeführt wird.

Die Gasbarriere strömt bevorzugt über die volle Längserstreckung des ersten Verbindungsdurchgangs und/oder des zweiten Verbindungsdurchgangs zumindest zum Teil an diesen vorbei.

Es ist günstig, wenn der Strömungsquerschnitt für die Gasbarriere mittels einer Strömungsleiteinrichtung verringert wird, bevor Gas der Gasbarriere an dem ersten Verbindungsdurchgang und/oder dem zweiten Verbindungsdurchgang vorbeiströmt.

Vorteilhaft umfasst die Strömungsleiteinrichtung hierfür Strömungsleitelemente.

Besonders günstig kann es sein, wenn der Gasraum im Gegenstromprinzip von der Gasbarriere durchströmt wird, so dass Gas der Gasbarriere an dem ersten Verbindungsdurchgang und an dem zweiten Verbindungsdurchgang mit entgegengesetzten Strömungsrichtungen vorbei strömt.

Bevorzugt wird das dem Gasraum zuzuführende Gas mittels einer Konditioniereinrichtung konditioniert.

Es ist mit Blick auf ein bodengebundenes Fördersystem günstig, wenn der Führungsbereich mit dem Fahrraum und dem Gasraum unterhalb eines Tunnelbodens des Behandlungstunnels ausgebildet ist.

Ausführungsbeispiele der Erfindung werden nun anhand der Zeichnungen näher erläutert. In diesen zeigen.
- Figur 1: schematisch einen vertikalen Querschnitt einer Behandlungsanlage mit einem Behandlungsraum und einem außerhalb des Behandlungsraumes angeordneten Führungsraum mit einem Fahrraum für ein Transportsystem und einem Gasraum für eine Gasbarriere;
- Figur 2: eine Detailansicht einer Durchgangsverbindung zwischen dem Behandlungsraum und dem Führungsraum;
- Figur 3: eine der Figur 2 entsprechende Detailansicht mit einer abgewandelten Durchgangsverbindung;
- Figur 4: einen vertikalen Längsschnitt der Behandlungsanlage, welche den Gasraum in Längsrichtung veranschaulicht;
- Figur 5: schematisch ein Ausführungsbeispiel mit einem abgewandelten Gasraum, in dem eine Gasbarriere erzeugbar ist, welche die Durchgangsverbindung zwischen dem Behandlungsraum und dem Führungsraum als Gasvorhang überströmt, wobei eine Behandlungsanlage mit einer Beschichtungseinrichtung veranschaulicht ist;
- Figur 6: eine Detailansicht des Gasraumes gemäß Figur 5 im Bereich der Durchgangsverbindung zwischen dem Beschichtungsraum und dem Führungsraum bei der Beschichtungseinrichtung;
- Figuren 7 bis 11: Detailansichten eines jeweils abgewandelten Gasraumes im Bereich der Durchgangsverbindung zwischen dem Beschichtungsraum und dem Führungsraum.

Die Figuren illustrieren schematisch eine insgesamt mit 10 bezeichnete Behandlungsanlage zur Behandlung von Werkstücken 12, welche beispielhaft als Fahrzeugkarosserien 14 veranschaulicht sind.

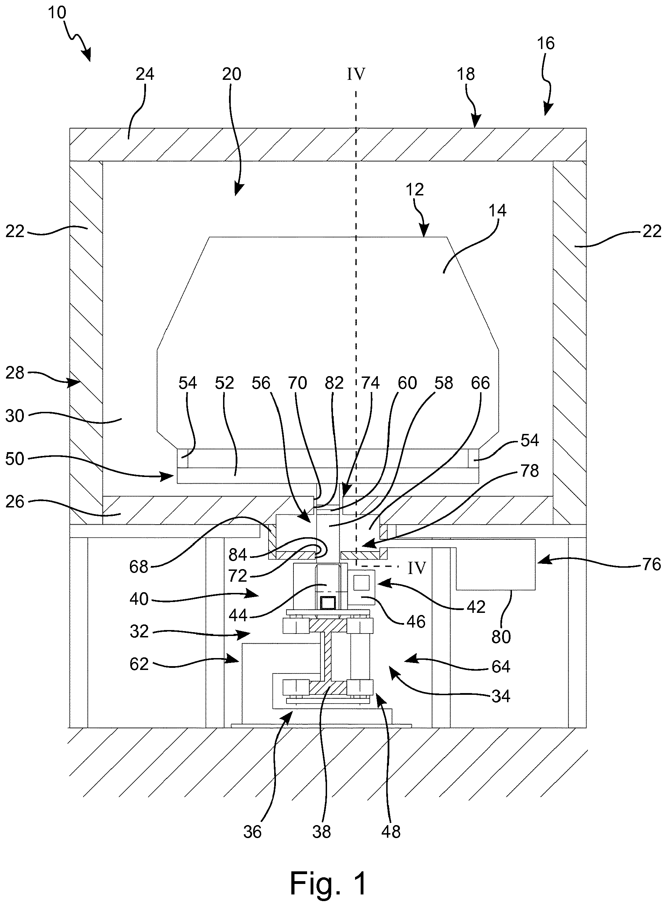

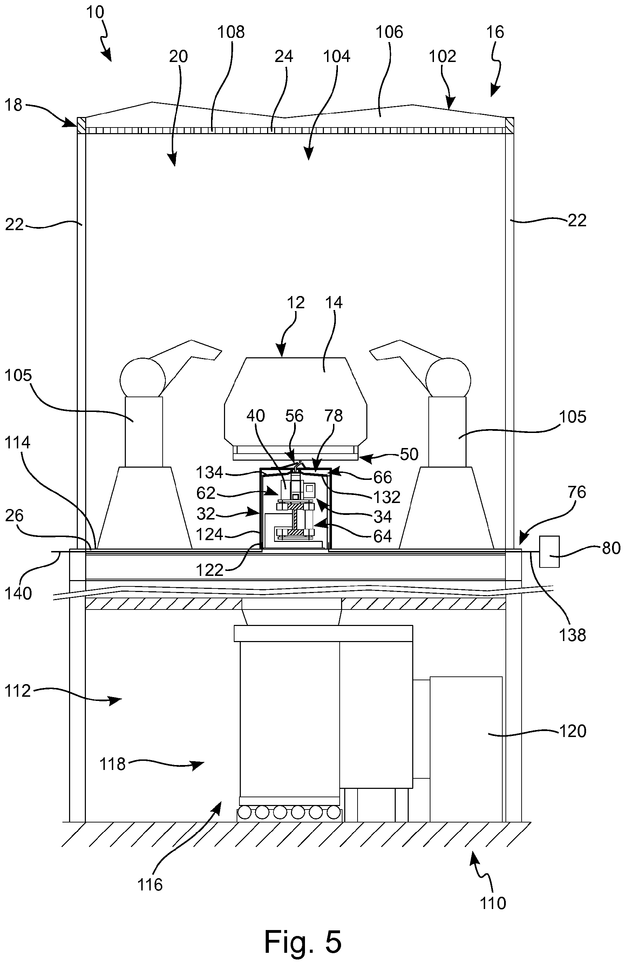

Die Behandlungsanlage 10 umfasst eine Behandlungseinrichtung 16 mit einem Gehäuse 18, welches einen Behandlungsraum begrenzt, der als Behandlungstunnel 20 ausgebildet ist und zwei Tunnelwände in Form von Seitenwänden 22 sowie zwei weitere Tunnelwände in Form einer Decke 24 und eines Tunnelbodens 26 umfasst. Bei einem bevorzugten Ausführungsbeispiel ist die Behandlungseinrichtung 16 ein Trockner 28, bei dem der Behandlungstunnel 20 einen Trockentunnel 30 vorgibt. Ein solcher Trockner ist in den Figuren 1 bis 4 veranschaulicht. Die Figuren 5 bis 11 zeigen Ausführungsbeispiele anhand einer Beschichtungseinrichtung, in welcher die Werkstücke 14 beschichtet und insbesondere lackiert werden. Hierauf wird weiter unten eingegangen.

Die Werkstücke 12 werden mit einem Fördersystem 32 durch den Behandlungstunnel 20 der Behandlungseinrichtung 16 hindurch gefördert. Die Behandlungseinrichtung 16 wird im Durchlauf betrieben und hat dementsprechend an einem stirnseitigen Ende einen Eingang und am gegenüberliegenden stirnseitigen Ende einen Ausgang. Als Behandlungstunnel 20 bzw. Trockentunnel 30 sind jedoch auch Behandlungsräume zu verstehen, die als Batch-System ausgelegt sind und gegebenenfalls nur einen einzigen Zugang haben, über den die Werkstücke 12 in den Behandlungsraum hinein und nach der Behandlung auch wieder aus diesem heraus gefördert werden.

Das Fördersystem 32 umfasst eine Vielzahl von Transportwagen 34, auf denen die Werkstücke 12 transportiert werden. Die Transportwagen 34 werden auf einem Schienensystem 36 verfahren. Bei einer nicht eigens gezeigten Abwandlung können die Transportwagen 34 als freifahrende Transportwagen im Sinne von fahrerlosen Transportsystemen ausgebildet sein, die dem Fachmann als sogenannte FTS geläufig sind.

Das vorliegende Schienensystem 36 ist einspurig ausgebildet und umfasst eine Tragschiene 38, auf welcher ein Transportwagen 34 verfährt und welche beim vorliegenden Ausführungsbeispiel als an und für sich bekanntes I-Profil ausgebildet ist. Das Schienensystem 36 kann auch mehrspurig, insbesondere zweispurig sein. Die Tragschiene 38 ist bodengebunden und am Boden der Anlage 10 verankert.

Jeder Transportwagen 34 umfasst ein Fahrwerk 40 und ein Antriebssystem 42, welche beim vorliegenden Ausführungsbeispiel eine Antriebsrolle 44 umfasst, die an der Tragschiene 38 abläuft und mittels eine Antriebsmotors 46 angetrieben werden kann. Die Transportwagen 34 sind auf diese Weise unabhängig voneinander antreibbar. Beim vorliegenden Ausführungsbeispiel läuft die Antriebsrolle 44 auf der Oberseite der Tragschiene 38 ab. Bein einer Abwandlung kann die Antriebsrolle 44 auch seitlich an der Tragschiene 38 angreifen.

Zusätzlich zu oder anstelle von den hier erläuterten Transportwagen 34 mit jeweils einem eigenem mitgeführten Antriebssystem 42 können gegebenenfalls auch andere Transportwagen vorhanden sein, welche durch ein zentrales Antriebssystem angetrieben werden. Beispielsweise kann ein solches zentrales Antriebssystem durch einen Kettenzug oder dergleichen ausgebildet sein. Die hier erläuterten Transportwagen 34 können entsprechend auch unabhängig von anderen Antriebseinrichtungen angetrieben und verfahren werden.

Um zu verhindern, dass der Transportwagen 34 in Transportrichtung oder quer zur Transportrichtung verkippt, ist ein Stützsystem 48 mit Stützrollen vorgesehen, die an der Tragschiene 38 anliegen und in an und für sich bekannter Art und Weise ein entsprechendes Verkippen des Transportwagens 34 verhindern.

Der Transportwagen 34 umfasst eine Befestigungseinrichtung 50, an welche ein Werkstück 12 oder ein entsprechender Werkstückträger für Werkstücke 12 befestigt werden kann. Für die Befestigung von Fahrzeugkarosserien 14 umfasst die Befestigungseinrichtung 50 beim vorliegenden Ausführungsbeispiel ein Tragprofil 52 mit Lagerbolzen 54, die in an und für sich bekannter Art und Weise mit Gegenelementen an der Fahrzeugkarosserie 14 zusammenarbeiten, so dass die Fahrzeugkarosserie 14 an der Befestigungseinrichtung 50 fixiert werden kann. Die Befestigungseinrichtung 50 kann auch mehrere Sätze von solchen Lagerbolzen 54 aufweisen, die an unterschiedliche Fahrzeugkarosserien 14 mit verschiedenen Abmessungen und Ausgestaltungen angepasst sind, so dass die Befestigungseinrichtung 50 flexibel für unterschiedliche Fahrzeugkarosserietypen genutzt werden kann. Die Befestigungseinrichtung 50 nimmt eine Fahrzeugkarosserie 14 somit unmittelbar auf, ohne dass die Fahrzeugkarosserie 10 auf einem Werkstückträger, wie beispielsweise einem an und für sich bekannten Skid, befestigt ist.

Das Fahrwerk 40 des Transportwagens 34 ist mittels einer Verbindungseinrichtung 56 mit der Befestigungseinrichtung 50 gekoppelt. Beim vorliegenden Ausführungsbeispiel umfasst die Verbindungseinrichtung wenigstens eine vertikale Strebe 58, wobei aus Stabilitätsgründen zwei vertikale Streben 58 vorhanden sind; jede vorhandene Strebe 58 koppelt das Fahrwerk 40 des Transportwagens 34 mit der Befestigungseinrichtung 50.

Der Transportwagen 34 kann derart ausgebildet sein, dass er in der Lage ist, Kurvenabschnitte der Tragschiene 38 zu durchfahren. Hierfür kann das Fahrwerk 40 des Transportwagens 34 insbesondere mit einer Vorläufereinheit und einer Nachläufereinheit konzipiert sein, die gelenkig miteinander verbunden sind.

Wenn der Transportwagen 34 für Kurvenfahrten ausgelegt ist, ist auch die Kopplung zwischen dem Fahrwerk 40 und der Befestigungseinrichtung 50 durch die Verbindungseinrichtung 56 so eingerichtet, dass entsprechende Kurvenfahrten möglich sind. Hierfür sind die Streben 58 beispielsweise als Gelenkstreben 60 ausgebildet, die es durch ein Gelenk ermöglichen, dass die Befestigungseinrichtung 50 um eine vertikale Drehachse gegenüber dem Fahrwerk 40 des Transportwagens 34 verschwenken kann, wie es die Figuren veranschaulichen.

Wenn das Fahrwerk 40 eine Vorläufereinheit und eine Nachläufereinheit umfasst, kann jede dieser beiden Einheiten mit jeweils einer Strebe 58 bzw. mit jeweils einer Gelenkstrebe 60 verbunden sein.

Die Behandlungseinrichtung 16 und das Fördersystem 32 sind so aufeinander abgestimmt, dass sich nur ein Teil des Fördersystems 32 in dem Behandlungsraum, d.h. in dem Behandlungstunnel 20 bewegt, während der andere Teil des Fördersystems 32 außerhalb des Behandlungstunnels 20 bewegt wird.

Hierfür ist außerhalb des Behandlungstunnels 20 ein Führungsbereich 62 mit einem Fahrraum 64 angeordnet, in dem das Schienensystem 30 untergebracht ist und in welchem sich das Fahrwerk 40 eines Transportwagens 34 bewegt, wobei der Behandlungstunnel 20 und der Führungsbereich 62 durch eine Tunnelwand getrennt sind.

Eine Anordnung des Führungsbereichs 62 "außerhalb" des Behandlungstunnels 20 ist so zu verstehen, dass es eine strukturelle Trennung zwischen dem Behandlungstunnel 20 und dem Führungsbereich 62 durch die angesprochene Tunnelwand gibt. Dies bedeutet nicht, dass der Führungsbereich 62 nicht zumindest bereichsweise in den Behandlungstunnel 20 hineinragen kann und im Querschnitt mit dem Behandlungstunnel 20 überlappen kann.

Beim vorliegenden Ausführungsbeispiel ist die Tunnelwand, welche den Behandlungstunnel 20 und den Führungsbereich 62 voneinander trennt, der Tunnelboden 26, wobei der Führungsbereich 62 mit dem Fahrraum 64 unterhalb des Tunnelbodens 26 angeordnet ist.

Der Fahrraum 64 kann zur Umgebung der Behandlungseinrichtung 16 hin offen sein; jedenfalls muss kein eigenes Gehäuse für den Fahrraum 64 vorhanden sein. Bei einer nicht eigens gezeigten Abwandlung ist der Fahrraum 64 durch ein eigenes Gehäuse begrenzt. Alternativ können sich auch die Seitenwände 22 des Gehäuses 18 nach unten über den Tunnelboden 26 hinaus erstrecken, so dass sie den Fahrraum 64 seitlich begrenzen.

In dem Führungsbereich 62 ist ein Gasraum 66 ausgebildet, der von einem gesonderten Gasraum-Gehäuse 68 begrenzt ist. Gesondert bedeutet, dass das Gasraum-Gehäuse 68 unabhängig von anderen Gehäusen, beispielsweise von dem angesprochenen eigenen Gehäuse des Fahrraumes 64 für den Gasraum 66 vorhanden ist. Das Gasraum-Gehäuse 68 muss nicht gasdicht ausgebildet sein, sondern lediglich eine strömungstechnisch ausreichende Trennung des Gasraumes 66 von der Umgebung bewirken. Insbesondere kann das Gasraum-Gehäuse 68 an den Stirnseiten, d.h. am Eingang und am Ausgang des Behandlungstunnels 20, offen sein, wenn dort auf eine Schleusentechnik verzichtet werden kann.

Der Gasraum 66 ist zwischen dem Fahrraum 64 und dem Behandlungstunnel 20 angeordnet und ist über einen ersten Verbindungsdurchgang 70 im Gasraum-Gehäuse 68 mit dem Behandlungstunnel 20 und über einen zweiten Verbindungdurchgang 72 mit dem Fahrraum 64 verbunden. Der erste und der zweite Verbindungsdurchgang 70, 72 sind komplementär zu der Verbindungseinrichtung 56 der Transportwagen 34.

Die Verbindungseinrichtung 56 erstreckt sich durch die beiden Verbindungsdurchgänge 70, 72 und den Gasraum 66 hindurch, so dass sich die Befestigungseinrichtung 50 mit dem Werkstück 12 in dem Behandlungstunnel 20 und sich das Fahrwerk 40 eines Transportwagens 34 in dem Fahrraum 64 befinden.

Beim vorliegenden Ausführungsbeispiel bildet ein Abschnitt des Tunnelbodens 26 einen Bereich des Gasraum-Gehäuses 68, wobei der erste Verbindungsdurchgang 70 in dem Tunnelboden 26 ausgebildet ist.

Bei der Einfahrt eines mit einer Fahrzeugkarosserie 14 beladenen Transportwagens 34 in eine Behandlungseinrichtung 16 wird die Verbindungseinrichtung 56 des Transportwagens 34 also gleichsam in die Verbindungsdurchgänge 70, 72 des Gasraum-Gehäuses 68 eingefädelt. Wenn die Fahrzeugkarosserien 14 dann durch den Behandlungstunnel 26 gefördert werden, bewegt sich das Fahrwerk 40 im Fahrraum 64 und führt die Befestigungseinrichtung 50 im Behandlungstunnel 20 mit sich, wobei sich die Verbindungseinrichtung 56, d.h. beim vorliegenden Ausführungsbeispiel die Streben 58 bzw. die Gelenkstreben 60, durch die Verbindungsdurchgänge 70 und 72 sowie durch den Gasraum 66 hindurch erstreckt.

Der Behandlungstunnel 20 und der Fahrraum 64 sind über einen Strömungsweg 74 fluidisch miteinander verbunden. Dieser Strömungsweg 74 ist zumindest immer dort ausgebildet, wo die Verbindungseinrichtung 56 der Transportwagen 34 sich zwischen dem Behandlungstunnel 20 und dem Fahrraum 64 erstreckt. Beim dem hier beschriebenen Ausführungsbeispiel ist entsprechend ein Strömungsweg 74 jeweils entlang der Streben 58 bzw. der Gelenkstreben 60 ausgebildet.

Dem Gasraum 66 kann nun mit einer Gas-Versorgungseinrichtung 76 ein Gas zugeführt werden, bei dem es sich in der Praxis um Luft handelt. Aber auch andere Gase, beispielsweise Inertgase wie Stickstoff oder dergleichen, kommen in Betracht.

Mit Hilfe der Gas-Versorgungseinrichtung 76 kann in dem Gasraum 66 eine Gasbarriere 78 zwischen dem Behandlungstunnel 20 der Behandlungseinrichtung 16 und dem Fahrraum 64 des Fördersystems 32 erzeugt und somit aufgebaut und aufrechterhalten werden.

Durch die Gasbarriere 78 wird einerseits verhindert, dass Tunnelatmosphäre aus dem Behandlungstunnel 20 in den Fahrraum 64 strömen kann. Hierdurch wird die eingangs angesprochene Kondensatbildung von Lösemittel im Fahrraum 64 vermieden und die dort befindliche Fördertechnik nicht belastet.

Hierzu weist die Gasbarriere 78 in dem Gasraum 66 einen Druck auf, der gegenüber dem Druck in dem Behandlungstunnel 20 erhöht ist, so dass Gas aus dem Gasraum 66 durch den ersten Verbindungsdurchgang 70 in den Behandlungstunnel 20 einströmt. Der Gasraum 66 ist dann als Druckraum konzipiert.

Die Gasbarriere 78 ist in diesem Fall folglich eine strömende Gasbarriere.

Andererseits kann die Gasbarriere 78 zusätzlich verhindern, dass Atmosphäre aus dem Fahrraum 64, die beispielsweise mit Abrieb oder Schmiermitteln der Fördertechnik in dem Fahrraum 64 belastet sein kann, in den Behandlungstunnel 20 eintritt.

Hierzu weist die Gasbarriere 78 in dem Gasraum 66 einen Druck auf, der gegenüber dem Druck in dem Fahrraum 64 erhöht ist, so dass Gas aus dem Gasraum 66 durch den zweiten Verbindungsdurchgang 72 in den Fahrraum 64 einströmt.

Da das Gas in dem Gasraum 66 somit unbelastet von Verunreinigungen aus dem Fahrraum 64 ist, kann es auch Frischluft als Gas verwendet werden, die zugleich bei dem Frischlufthaushalt der Behandlungseinrichtung 16 berücksichtigt wird. So kann von vornherein benötigte Frischluft als Gas für die Gasbarriere dienen, wodurch die benötigten Ressourcen effektiv genutzt werden.

Die Gas-Versorgungseinrichtung 76 umfasst eine Konditioniereinrichtung 80, mit welcher das dem Gasraum 66 zugeführte Gas konditioniert werden kann. Hierbei kann insbesondere die Temperatur des Gases an die Temperatur der Tunnelatmosphäre in dem Bereich des Behandlungstunnels 20 angepasst werden, in den das Gas aus dem Gasraum 66 in den Behandlungstunnel 20 eintreten wird. So kann beispielsweise vermieden werden, dass zu kaltes Gas in den Behandlungstunnel 20 eintritt, was zu einem auskondensieren von Lösemittel im Behandlungstunnel 20 führen würde. Mit Blick auf die Fördertechnik im Fahrraum 64 wird die Temperatur des Gases aber auch so abgestimmt, dass eine für die Fördertechnik schädliche Temperatur nicht erreicht wird. Darüber hinaus kann mit der Konditioniereinrichtung 80 beispielsweise auch die Feuchtigkeit des Gases eingestellt werden.

Zum Erwärmen des Gases kann die Konditioniereinrichtung 80 beispielsweise die Abwärme der Behandlungsanlage 10 nutzen, indem zum Beispiel die Wärme von in der Behandlungsanlage 10 anfallender Abluft oder von sonstigen Prozessmedien mittels eines Wärmetauschers auf das Gas übertragen wird.

Bei dem in Figur 1 gezeigten Ausführungsbeispiel sind der erste und der zweite Verbindungsdurchgang 70 und 72 passend zu den vertikal verlaufenden Streben 58 bzw. den Gelenkstreben 60 als vertikale Durchgangsschlitze 82 bzw. 84 ausgebildet.

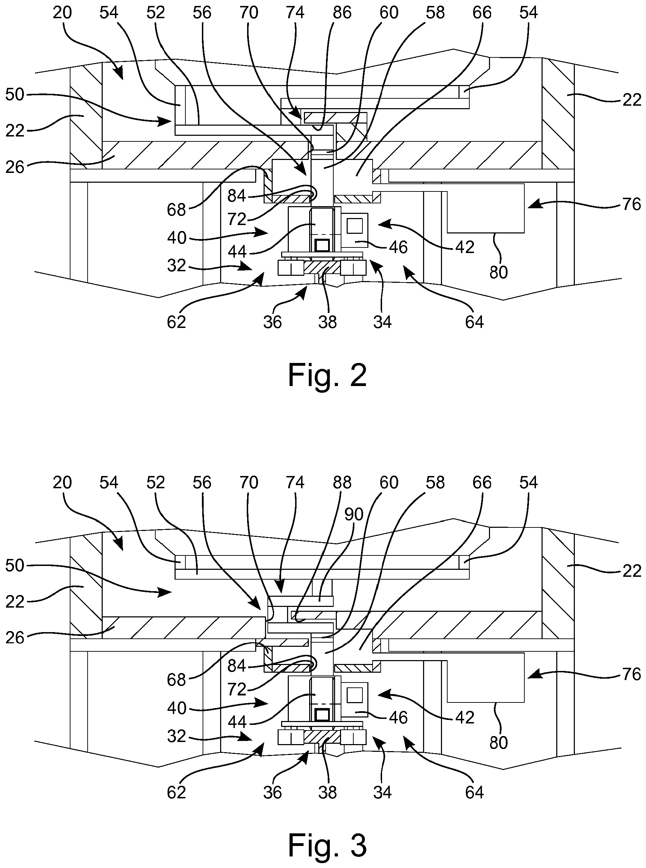

Insbesondere der erste Verbindungsdurchgang 70 zwischen dem Behandlungstunnel 20 und dem Gasraum 66 kann jedoch auch zu einer Art Labyrinthdichtung abgewandelt werden, beispielsweise in der Art, wie es die Figuren 2 und 3 veranschaulichen.

Eine solche Labyrinthdichtung kann zu zwei Effekten führen. Zum einen kann sie ein Ausströmen von Tunnelatmosphäre aus dem Behandlungstunnel 20 in den Gasraum 66 zumindest erschweren. Dies bietet einen Sicherheitsaspekt im Falle einer Störung der Gas-Versorgungseinrichtung 76, die zu einem Einbrechen der Gasbarriere 78 führen kann. In diesem Fall eröffnet eine entsprechende Labyrinthdichtung ein zusätzliches Zeitfenster, in dem es noch zu keinem Austritt von Tunnelatmosphäre kommt, die dann auch aus dem Gasraum 66 in den Fahrraum 64 strömen könnte. Um auch diesen Weg zu erschweren, kann auch der zweite Verbindungdurchgang 72 als eine Art Labyrinthdichtung ausgestaltet werden, was jedoch nicht eigens gezeigt ist.

Zum anderen Verlängert eine entsprechende labyrinthartige Ausbildung des ersten Verbindungsdurchganges 70 die Verweildauer des Gases im Bereich des Tunnelbodens 26, der auf Grund der im Behandlungstunnel 20 herrschenden Temperatur erwärmt ist. Diese Wärme kann so effektiver auf das Gas übertragen werden, als bei dem einfachen vertikalen Durchgangsschlitz 82, was zum Anpassen der Temperatur des Gases an die Temperatur der Tunnelatmosphäre genutzt werden kann.

Die Figuren 2 und 3 veranschaulichen zwei Beispiele für einen labyrinthartigen ersten Verbindungsdurchgang 70. Bei dem in Figur 2 gezeigten Ausführungsbeispiel ist der erste Verbindungsdurchgang 70 zwischen dem Behandlungstunnel 20 und dem Gasraum 66 nicht geradlinig und öffnet nicht in Richtung nach oben zum Behandlungstunnel 20. Vielmehr hat der Verbindungsdurchgang 70 dort im Querschnitt einen einfach gewinkelten Verlauf, so dass ein im Querschnitt einfach gewinkelter Durchgangsschlitz 86 ausgebildet ist, der zum Gasraum 66 vertikal nach unten und zum Behandlungstunnel 20 hin seitlich offen ist. Die Befestigungseinrichtung 50 und die Verbindungseinrichtung 56 des Transportwagens 34 sind nun derart aneinander angepasst, dass die Befestigungseinrichtung 50 diesen gewinkelten Verbindungsschlitz 86 gleichsam umgreifen kann. Hierzu ist das Tragprofil 52 der Befestigungseinrichtung 50 entsprechend zur Längsmittelebene unsymmetrisch ausgebildet, wie es Figur 2 veranschaulicht.

Bei dem in Figur 3 gezeigten Ausführungsbeispiel hat der erste Verbindungsdurchgang 70 zwischen dem Behandlungstunnel 20 und dem Gasraum 66 einen zweifach gewinkelten Verlauf, so dass ein im Querschnitt zweifach gewinkelter Durchgangsschlitz 88 ausgebildet ist, der vertikal nach unten zum Gasraum 66 und demgegenüber seitlich versetzt vertikal nach oben zum Behandlungstunnel 20 hin offen ist. Dort umfassten die Streben 58 einen C-förmigen Abschnitt 90, welcher dem Verlauf des zweifach gewinkelten Verbindungsschlitzes 88 folgen. Bei den Gelenkstreben 60 ist dieser C-förmige Abschnitt 90 oberhalb von deren Gelenk angesiedelt.

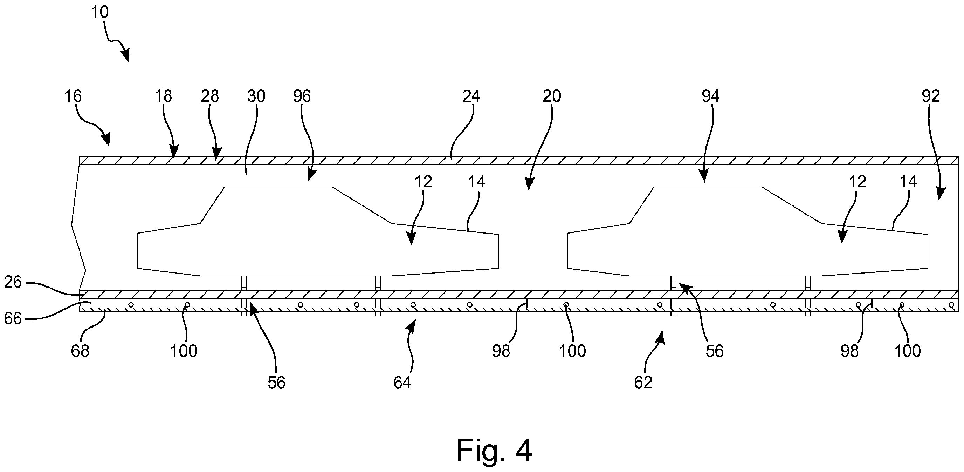

Bei dem in Figur 4 gezeigten Längsschnitt der Behandlungseinrichtung 16 wird der Behandlungstunnel 20 von links nach rechts beschickt und weist in dieser Förderrichtung eine Eingangs-Schleusenzone 92, eine Aufheizzone 94 und eine Haltezone 96 auf, in denen jeweils verschiedene Temperaturen herrschen.

Bei dem in Figur 4 gezeigten Ausführungsbeispiel ist der Gasraum 66 gemäß diesen Zonen 92, 94, 96 und gemäß gegebenenfalls in Förderrichtung weiter auftretender Zonen durch entsprechende Querschotts 98 in zugehörige Gasraum-Abschnitte unterteilt, in welche jeweils Zuführöffnungen 100 der Gas-Versorgungseinrichtung 76 münden, durch welche jedem Gasraum-Abschnitt Gas zugeführt werden kann. Es tragen nicht alle gezeigten Zuführöffnungen 100 ein Bezugszeichen. Die Gas-Zuführeinrichtung 76 kann dabei derart eingerichtet sein, dass einzelnen oder allen Abschnitten des Gasraumes 66 unabhängig von den anderen Abschnitten Gas mit unterschiedlichem Volumenstrom und unterschiedlicher Konditionierung zugeführt werden kann, so dass der Gasstrom an die jeweilige Tunnelatmosphäre in einer Zone 92, 94, 96 im Behandlungstunnel 20 angepasst werden kann. Gegebenenfalls können für einige oder alle Abschnitte des Gasraumes 66 gesonderte Konditioniereinrichtungen 80 vorgesehen sein.

Durch die separaten Abschnitte ist es auch möglich, bei Abwesenheit von Transportwagen 34 die Gaszuführung zu diesen Abschnitten zu reduzieren oder zu unterbrechen.

Die Querschotts 98 in dem Gasraum 66 sind so ausgebildet, dass die Verbindungseinrichtung 56 die Querschotts 98 passieren kann. Hierfür können als Querschotts 98 beispielsweise flexible Lamellen eingesetzt werden. Aber auch motorisch bewegbare Schottwände kommen in Betracht.

Am Eingang und am Ausgang an den Stirnseiten der Behandlungseinrichtung 16 hat der Gasraum 66 entsprechende Eingangs- bzw. Ausgangsschotts, die hier nicht eigens gezeigt sind. Gegebenenfalls kann dort auch ein Gasvorhang mit einem Volumenstrom erzeugt werden, der einen Druckaufbau in dem Gasraum 66 durch das zugeführte Gas erlaubt.

Durch den Gasraum 66 sind der Behandlungstunnel 20 und der Fahrraum 64 strömungstechnisch in der Weise voneinander getrennt, dass es nur zu geringen Kontaminationen durch gegenseitig überströmende Anteile der jeweils in dem Behandlungstunnel 20 oder dem Fahrraum 64 herrschenden Atmosphäre kommen kann. Hierdurch ist einerseits die Belastung der Fördertechnik im Fahrraum 64 durch aggressive Atmosphärenbestandteile verringert und ist andererseits eine Verunreinigung der Tunnelatmosphäre im Behandlungstunnel 20 weitgehend verhindert.

Das Fördersystem 32 ist als bodengebundenes Fördersystem beschrieben. Bei nicht eigens gezeigten Abwandlungen können auch anders konzipierte Fördersysteme vorgesehen sein. Bei einem an und für sich bekannten Hängebahnsystem ist die Tunnelwand mit dem ersten Verbindungsdurchgang 70 dann entsprechend die Tunneldecke 24. Bei anderen Konzepten kann sich der Führungsbereich 62 auch seitlich neben einer Seitenwand 22 des Behandlungstunnels 20 befinden, welche dann entsprechen den ersten Verbindungsdurchgang 70 aufweist.

Bei ebenfalls nicht eigens gezeigten Abwandlungen sind an den Verbindungsdurchgängen 70 und/oder 72 in deren Längsrichtung ergänzende Abschirmmittel vorgesehen. Dies kann insbesondere dann angebracht sein, wenn angedacht ist, die Gaszufuhr zumindest zu unterschiedlichen Abschnitten des Gasraumes 66 zu reduzieren oder zu unterbrechen, wie es oben beschrieben ist. Auch in solchen Fällen sollte ein Austreten von Tunnelatmosphäre aus dem Behandlungstunnel 20 so gering wie möglich ausfallen.

Hierzu können solche ergänzenden Abschirmmittel vorgesehen sein, wie sie in der eingangs erwähnten DE 10 2015 006 098 A1 für eine Abschirmung über die Längserstreckung des dortigen Verbindungsdurchgangs im Tunnelboden beschrieben sind. Somit können derartige Abschirmmittel beispielsweise als Schuppendichtung mit einer Vielzahl von Dichtlamellen ausgebildet sein, die dann von den Streben 58 bzw. den Gelenkstreben 60 des Transportwagens 34 weggedrückt werden, wenn sich dieser in der Behandlungseinrichtung 16 bewegt. Alternativ zu Lamellen können auch bürstenartige Elemente vorgesehen sein, welche den oder die Verbindungsdurchgänge 70, 72 abdecken. Gegebenenfalls können in einem oder in mehreren Abschnitten der Verbindungsdurchgänge 70, 72 auch in Längsrichtung der Verbindungsdurchgänge 70, 72 etwas längere, zur Seite verschiebliche Bleche gelagert sein, die ebenfalls von den Streben 58 bzw. den Gelenkstreben 60 von dem Verbindungsdurchgang 70 oder 72 weggedrückt werden, wenn ein Transportwagen 34 die Behandlungseinrichtung 16 durchfährt. Wenn dem Gasraum 66 bei Anwesenheit eines Transportwagens 34 Gas zugeführt wird, ist es unschädlich, wenn größere Abschnitte der Verbindungsdurchgänge 70, 72 strömungstechnisch offen sind. Solche verschieblichen Bleche können im Querschnitt beispielsweise bezogen auf den jeweiligen Verbindungsdurchgang wie ein umgekehrtes U gebogen sein, so dass Partikel, die gegebenenfalls im Behandlungsraum 20 oder im Fahrraum 645 auftreten und in Richtung des Gasraumes 66 strömen, zur Seite abgelenkt werden.

Figur 5 zeigt nun eine Behandlungseinrichtung 16 in Form einer Beschichtungseinrichtung 102, bei welcher der Behandlungstunnel 20 einen Beschichtungstunnel 104 vorgibt. In dem Beschichtungstunnel 104 sind Applikationsvorrichtungen in Form von mehrachsigen Applikationsrobotern 105 angeordnet, wie sie an und für sich bekannt sind. Mittels der Applikationsroboter 105 können die Fahrzeugkarosserien 14, oder andere zu beschichtende Werkstücke 12, mit dem entsprechenden Material beschichtet werden. Insbesondere werden die Werkstücke 12 in der Beschichtungseinrichtung 102 lackiert. Bei der Applikation von Beschichtungsmaterial auf die Werkstücke 14 entsteht im Behandlungstunnel 20 Overspray.

Die Decke 24 des Beschichtungstunnels 104 ist bei der Beschichtungseinrichtung 102 strömungsdurchlässig und trennt den Beschichtungstunnel 104 räumlich, d.h. also nicht strömungstechnisch, von einem darüber angeordneten Luftzuführraum 106, der in der Fachwelt als sogenanntes Luftplenum bezeichnet wird. Die Decke 24 als solche ist beim vorliegenden Ausführungsbeispiel als Filterdecke 108 ausgebildet, wie es an und für sich bekannt ist.

Dem Luftzuführraum 106 kann mit Hilfe eines Luftsystems 110 konditionierte Luft zugeführt werden, die durch die Decke 24 hindurch als Kabinenluft weiter durch den Beschichtungstunnel 104 nach unten strömt. Der Overspray im Beschichtungstunnel 104 wird von der Kabinenluft auf- und mitgenommen.

Nach unten hin ist der Beschichtungstunnel 104 zu einem darunter angeordneten Anlagenteil 112 in der Art offen, dass der Tunnelboden 26 ebenfalls strömungsdurchlässig ist. Hierfür ist der Tunnelboden 26 zumindest bereichsweise als begehbarer Gitterrost 114 ausgebildet. In dem unteren Anlagenteil 112 werden von der Kabinenluft mitgeführten Overspraypartikel von der Kabinenluft getrennt. Hierfür wird die mit Overspray beladene Kabinenluft zu einer insgesamt mit 116 bezeichneten Abscheidevorrichtung 116, die sich in einem Abscheidebereich 118 des unteren Anlagenteils 112 befindet. Eine Abscheidevorrichtung 116 kann beispielsweise austauschbare Filtereinheiten umfassen, als elektrostatisch arbeitende Abscheidevorrichtung konzipiert sein oder auch diese beiden Filtertechniken kombinieren; beide Varianten sind an und für sich bekannt. Auch andere bekannte Filterkonzepte können umgesetzt und kombiniert werden.

In der Abscheidevorrichtung 116 scheidet sich Overspray ab. Die nun weitgehend von Overspraypartikeln befreite Kabinenluft strömt in einen Sammelströmungskanal 120 und kann von dort einer weiteren Aufbereitung und Konditionierung zugeführt und im Anschluss daran in einem hier nicht eigens gezeigten Kreislauf wieder als konditionierte Luft des Luftsystems 110 in den Luftzuführraum 106 geleitet werden, aus dem sie wieder von oben in den Beschichtungstunnel 104 einströmt.

Auch bei der Beschichtungseinrichtung 102 ist der Führungsbereich 62 mit dem Fahrraum 64 außerhalb des Behandlungstunnels 20 angeordnet. Im Unterschied zu dem Trockner 28 befindet sich der Führungsbereich 62 jedoch oberhalb des Tunnelbodens 26 und ist von einer Wandung 122 umgeben und durch diese von dem Behandlungstunnel 20 abgegrenzt. Die Wandung 122 definiert folglich zugleich eine weitere Tunnelwand 124 des Behandlungstunnels 20. Diese Tunnelwand 124 trennt den Behandlungstunnel 20 und den Führungsbereich 62, wie dies bei dem Trockner 28 durch die Tunnelwand in Form des Tunnelbodens 26 verwirklicht ist.

Entlang des Tunnelbodens 26 kann der Führungsbereich 62 durch einen gesonderten geschlossenen Boden begrenzt sein.

Bei einer anderen technischen Betrachtungsweise kann die Wandung 122 auch als Abschnitt des Tunnelbodens 26 verstanden werden, welcher allgemein den Behandlungstunnel 20 und hier den Beschichtungstunnel 104 bereichsweise begrenzt. In diesem Fall ist der Tunnelboden 26 eine Kombination von Gitterrostbereichen und der Wandung 122.

Bei einem Hängebahnkonzept oder einer seitlichen Anordnung des Führungsbereichs 62 würde die Wandung 122 und somit die Tunnelwand 124 unterhalb der Decke 24 bzw. nach innen neben einer Seitenwand 22 angeordnet sein und könnte entsprechend als Abschnitt der Decke 24 bzw. der zu betrachtenden Seitenwand 22 verstanden werden.

Sowohl bei dem Trockner 28 als auch bei der Beschichtungseinrichtung 102 sind der Führungsbereich 62 mit dem Fahrraum 64 und dem Gasraum 66 unterhalb zumindest eines Abschnitts einer Tunnelwand 26; 124 des Behandlungstunnels 20 ausgebildet.

Bei dem Trockner 28 befindet sich der Führungsraum 62 vollständig unterhalb des dortigen Tunnelbodens 26 und bei der Beschichtungseinrichtung 104 befindet sich der Führungsraum 62 vollständig oberhalb des Tunnelbodens 26 in Form des Gitterrostes 114, wobei der Tunnelboden 26 bei dieser Betrachtung als horizontale Ebene verstanden wird. Bei nicht eigens gezeigten Abwandlungen kann der Führungsraum 62 auch derart angeordnet sein, dass sich ein Abschnitt oberhalb und ein Abschnitt unterhalb des Tunnelbodens 26 erstreckt.

Bei einem Hängebahnkonzept oder einer seitlichen Anordnung des Führungsbereichs 62 würde sich der Führungsraum 62 entsprechend teilweise oberhalb und teilweise unterhalbe der Decke 24 bzw. teilweise zu beiden Seiten einer Seitenwand 22 erstrecken. Die oben am Beispiel des Trockners 28 beschriebenen Ausführungsbeispiele einer Behandlungseinrichtung 16 können entsprechend bei einer Beschichtungseinrichtung 104 umgesetzt werden.

In entsprechender Weise können die nun nachfolgend am Beispiel der Behandlungseinrichtung 104 erläuterten Ausführungsbeispiele auch bei einem Trockner 28 realisiert werden.

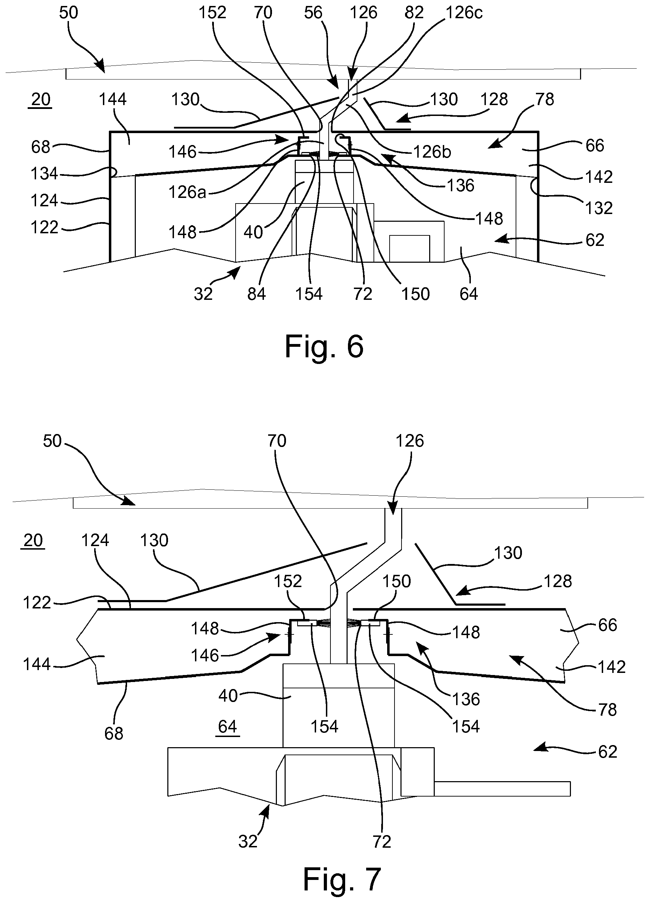

Figur 6 zeigt nun bei der Beschichtungseinrichtung 102 den Gasraum 66 in größerem Maßstab, der zwischen dem Fahrraum 64 und dem Behandlungstunnel 20, d.h. hier dem Beschichtungstunnel 104, angeordnet und ist über den ersten Verbindungsdurchgang 70 im Gasraum-Gehäuse 68 mit dem Behandlungstunnel 20 und über den zweiten Verbindungdurchgang 72 mit dem Fahrraum 64 verbunden ist.

Der erste und der zweite Verbindungsdurchgang 70, 72 sind wieder komplementär zu der Verbindungseinrichtung 56 der Transportwagen 34.

Auch hier erstreckt sich die Verbindungseinrichtung 56 durch die beiden Verbindungsdurchgänge 70, 72 und den Gasraum 66 hindurch, so dass sich die Befestigungseinrichtung 50 mit dem Werkstück 12 in dem Behandlungstunnel 20 und sich das Fahrwerk 40 eines Transportwagens 34 in dem Fahrraum 64 befinden.

In den Figuren 6 bis 8 sowie 10 und 11 ist die Verbindungseinrichtung 56 als gewinkelte Strebe 126 mit einem unteren vertikalen Abschnitt 126a, der in Richtung nach oben in einem gegenüber einer vertikalen Ebene geneigten Abschnitte 126b übergeht, welcher seinerseits in einen oberen, wieder vertikalen Abschnitt 126c mündet, der mit der Befestigungseinrichtung 50 gekoppelt ist. Die Abschnitte 126a, 126b und 126c sind nur in Figur 6 mit Bezugszeichen versehen. Der obere vertikale Abschnitt 126c ist entsprechend in Längsrichtung der Verbindungsdurchgänge 70, 72 betrachtet bezogen auf den unteren vertikalen Abschnitt 126a der gewinkelten Strebe 126 zur Seite versetzt.

Bei den vorliegenden Ausführungsbeispielen erstreckt sich der untere vertikale Abschnitt 126a durch die beiden Verbindungsdurchgänge 70, 72 und den Gasraum 66 hindurch.

Im Beschichtungstunnel 104 ist ein Spritzschutz 128 vorgesehen, der den ersten Verbindungsdurchgang 70 gegenüber der mit Overspray beladenen Tunnelatmosphäre abschirmt. Beim vorliegenden Ausführungsbeispiel umfasst der Spritzschutz 128 zwei Abschirmbleche 130, welche sich in Längsrichtung parallel zum ersten Verbindungsdurchgang 70 erstrecken und den Bewegungsweg der Verbindungsstrebe 126 zu beiden Seiten flankieren.

Der Gasraum 66 ist als Durchströmungsraum ausgebildet, wozu das Gasraum-Gehäuse 68 einen oder mehrere Gaseinlässe 132 und einen oder mehrere Gasauslässe 134 umfasst, welche nur in den Figuren 5 und 6 zu erkennen sind, wobei die Gasbarriere 78 von den einen oder mehreren Gaseinlässen 132 zu den einen oder mehreren Gasauslässen 134 strömt. Die Gas-Versorgungseinrichtung 76 ist derart eingerichtet, dass dem Gasraum 66 durch einen oder mehrere Gaseinlässe 132 Gas für die Gasbarriere 78 zugeführt wird, welches dann den Gasraum 66 auf einem Strömungsweg 136 durchströmt und dabei in dem Gasraum 66 zumindest zum Teil und zumindest bereichsweise an dem ersten Verbindungsdurchgang 70 und/oder an dem zweiten Verbindungsdurchgang 72 vorbei strömt und hiernach durch einen oder mehrere Gasauslässe 134 von dem Gasraum 66 abgeführt wird. Vorzugsweise strömt die Gasbarriere 78 über die volle Längserstreckung der Verbindungsdurchgänge 70 und/oder 72 an diesen vorbei. Gegebenenfalls kann auch ein Teil das Gases der Gasbarriere 78 durch den ersten und/oder den zweiten Verbindungsdurchgang 70, 72 aus dem Gasraum 66 ausströmen; dies wird weiter unten nochmals angesprochen.

Die Gasversorgungseinrichtung 76 umfasst hierzu eine oder mehrere Gaszuführleitungen 138, die strömungstechnisch mit dem einen oder den mehreren Gaseinlässen 132 verbunden sind, über welche das Gas dann in den Gasraum 66 eintritt. Außerdem umfasst die Gasversorgungseinrichtung 76 eine oder mehrere Gasabführleitungen 140, die strömungstechnisch mit dem einen oder den mehreren Gasauslässen 134 verbunden sind, über welche das Gas aus dem Gasraum 66 ausströmt. Lediglich in Figur 5 sind eine Gaszuführleitung 138 und ein Gasabführleitung 140 gekennzeichnet.

Dabei strömt die Gasbarriere 78 also stets mit einer Richtungskomponente senkrecht zur Förderrichtung der Werkstücke 12 bzw. mit einer Richtungskomponente senkrecht zur Längserstreckung des ersten Verbindungsdurchgangs 70 bzw. des zweiten Verbindungsdurchgangs 72. Die Hauptströmungsrichtung der Gasbarriere 78 zwischen einem Gaseinlass 132 und einem Gasauslass 134 kann in einem Winkel von 90° zur Förderrichtung der Werkstücke 12 bzw. zur Längserstreckung des ersten Verbindungsdurchgangs 70 bzw. des zweiten Verbindungsdurchgangs 72 stehen, wenn sich ein Gaseinlass 132 und ein Gasauslass 134 entsprechend koaxial gegenüberliegen. Wenn ein Gaseinlass 132 und ein Gasauslass 134 dagegen in Förderrichtung der Werkstücke 12 zueinander versetzt angeordnet sind, kann dieser Winkel entsprechend auch Werte größer 0° und kleiner 90° haben.

Der Durchströmungsraum 136 kann lediglich einen Gaseinlass 132 und lediglich einen Gasauslass 134 aufweisen. In der Praxis weist der Durchströmungsraum 136 in Förderrichtung der Werkstücke 12 aber mehrere Gaseinlässe 132 und Gasauslässe 134 auf, so dass eine möglichst homogene Strömung der Gasbarriere 78 über die gesamte Länge des Gasraumes 66 und der Verbindungsdurchgänge erreicht werden kann.

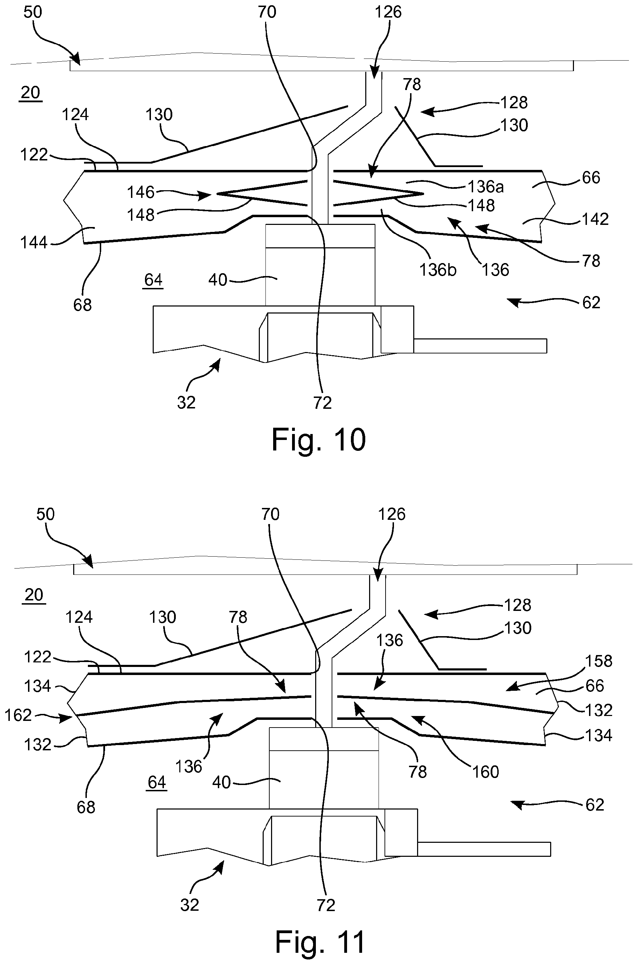

Die Figuren 5 bis 10 veranschaulichen Ausführungsbeispiele, bei welchen der Gasraum 66 einen Eingangsbereich 142 mit dem einen oder den mehreren Gaseinlässen 132 sowie einen Ausgangsbereich 144 mit dem einen oder den mehreren Gaseinlässen 134 definiert und bei denen der Eingangsbereich 142 und der Ausgangsbereich 144 in Förderrichtung der Werkstücke 12 einander gegenüberliegen. Figur 11 zeigt eine Variante, bei welcher der ein Eingangsbereich 142 und ein Ausgangsbereich 144 in Förderrichtung der Werkstücke 12 auf derselben Seite angeordnet sind; hierauf wird weiter unten noch eingegangen.

Bei den in den Figuren 6 bis 10 veranschaulichten Ausführungsbeispielen umfasst der Gasraum 66 eine Strömungsleiteinrichtung 146 mit Strömungsleitelementen 148, durch welche der Strömungsquerschnitt für die Gasbarriere 78 zwischen dem Eingangsbereich 142 und dem Ausgangsbereich 144 verringert wird, bevor Gas der Gasbarriere 78 an dem ersten Verbindungsdurchgang 70 und/oder dem zweiten Verbindungsdurchgang 72 vorbeiströmt.

Zu diesem Zweck umfasst die Strömungsleiteinrichtung 146 beim Ausführungsbeispiel gemäß Figur 6 zwei bezogen auf die Förderrichtung der Werkstücke 12 gegenüberliegende Strömungsleitelemente 148, so dass in Strömungsrichtung vor dem ersten Verbindungsdurchgang 70 ein erster Strömungsschlitz 150 am Eingangsbereich 142 und in Strömungsrichtung nach dem ersten Verbindungsdurchgang 70 ein gegenüberliegender zweiter Strömungsschlitz 152 am Ausgangsbereich 144 ausgebildet sind, die sich in Längsrichtung des ersten Verbindungsdurchgangs 70 erstrecken. Dabei sind die gegenüberliegenden Strömungsschlitze 150, 152 in gleicher vertikaler Höhe angeordnet.

Bei einer Abwandlung können die Strömungsschlitze 150, 152 jeweils durch gegenüberliegende Lochbleche oder dergleichen abgedeckt sein, so dass in Förderrichtung der Werkstücke 12 eine Vielzahl von gegenüberliegenden Strömungsdurchgängen ausgebildet ist, die koaxial oder in Förderrichtung der Werkstücke 12 zueinander versetzt sein können. Die Strömungsdurchgänge in solchen Lochblechen können verschiedenartige Querschnitte haben und beispielsweise als Schlitze oder kreisrunde Durchgänge oder Durchgänge mit ovalem Querschnitt ausgebildet sein. Bei einer weiteren Abwandlung können die Strömungsquerschnitte der Strömungsdurchgänge verändert werden. Beispielsweise kann hierzu ein unbewegliches Lochblech mit einem verschieblich gelagerten Lochblech zusammenarbeiten, das an dem unbeweglichen Lochblech anliegt.

Am zweiten Verbindungsdurchgang 72 zwischen dem Fahrraum 64 und dem Gasraum 66 sind Abschirmmittel in Form von Bürstenelementen 154 vorgesehen. Auch die oben erwähnten, zu Bürstenelementen alternativen Abschirmmittel können vorgesehen sein.

In den Bereich zwischen den Bürstenelementen 154 und den Strömungsschlitzen 150, 152 kann gegebenenfalls Gas der Gasbarriere 78 einströmen, welches dann bei entsprechenden Druckverhältnissen im Fahrraum 64 nach unten an den Bürstenelementen 154 vorbei durch den zweiten Verbindungsdurchgang 72 in den Fahrraum 64 strömen kann.

Figur 7 veranschaulicht eine Variante, bei welcher die Strömungsleiteinrichtung 146 ein Teil des Gasraum-Gehäuses 68 ist und den zweiten Verbindungsdurchgang 72 zwischen dem Fahrraum 64 und dem Gasraum 66 definiert. Auch dort sind am zweiten Verbindungdurchgang 72 Bürstenelemente 154 als Abschirmmittel vorgesehen. Bei diesem Ausführungsbeispiel gehört folglich der Bereich unmittelbar unter den in Figur 7 zu erkennenden Bürstenelementen 154 zum Fahrraum 64. Die Strömungsleiteinrichtung 146 ist folglich derart eingerichtet, dass der Strömungsquerschnitt für die Gasbarriere 78 zwischen dem Eingangsbereich 142 und dem Ausgangsbereich 144 verringert wird, bevor Gas der Gasbarriere 78 sowohl an dem ersten Verbindungsdurchgang 70 als auch an dem zweiten Verbindungsdurchgang 72 vorbeiströmt.

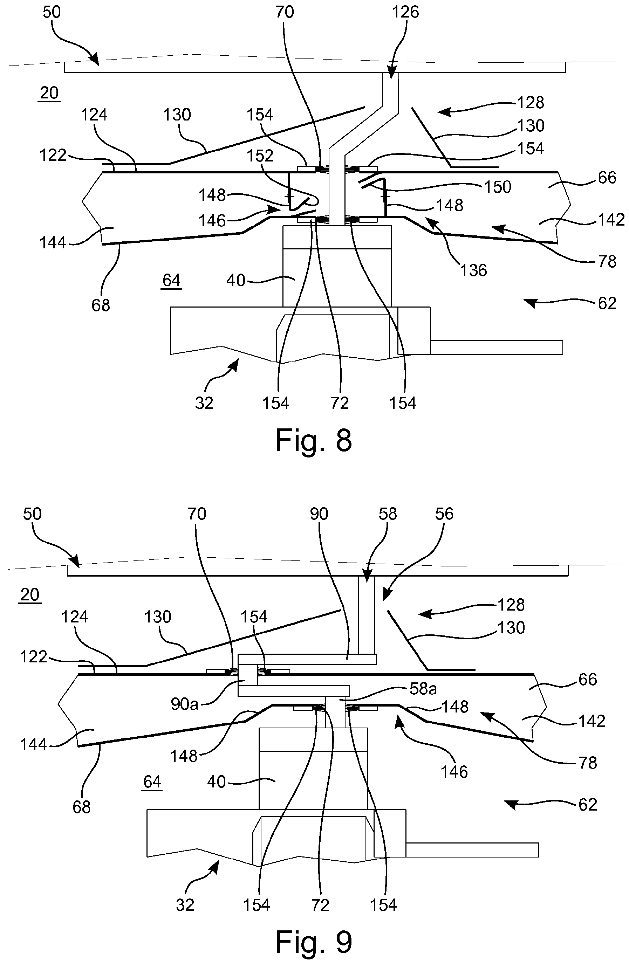

Auch an dem ersten Verbindungsdurchgang 70 zwischen dem Gasraum 66 und dem Beschichtungstunnel 104 können entsprechende Abschirmmittel vorgesehen sein. Dies veranschaulichen beispielsweise die Figuren 8 und 9.

Bei dem Ausführungsbeispiel gemäß Figur 8 sind die gegenüberliegenden Strömungsschlitze 150, 152 außerdem nicht auf vertikal gleicher Höhe angeordnet, sondern in vertikal unterschiedlichen Höhen ausgebildet. Dabei befindet sich der erste Strömungsschlitz 150 am Eingangsbereich 142 in einer höheren vertikalen Lage, als der zweite Strömungsschlitz 152 am Ausgangsbereich 144. Der erste Strömungsschlitz 150 ist zudem nach unten und der zweite Strömungsschlitz 152 hierzu komplementär nach oben geneigt, so dass die Gasbarriere 78 zwischen den Strömungsschlitzen 150, 152 bezogen auf eine horizontale Ebene nach unten strömt.

Bei einer nicht eigens gezeigten Abwandlung können die Verhältnisse auch umgekehrt sein, so dass die Gasbarriere 78 schräg von unten nach oben strömt.

Zudem hat der Strömungsschlitz 152 des Ausgangsbereichs 144 einen größeren Durchgangsquerschnitt als der Strömungsschlitz 150 des Eingangsbereichs 142.

Figur 9 veranschaulicht ein Ausführungsbeispiel, bei dem die Strömungsleiteinrichtung 146 ebenfalls Teil des Gasraum-Gehäuses 68 ist. Dort fällt die Verengung des Strömungsquerschnittes für die Gasbarriere 78 zwischen dem Eingangsbereich 142 und dem Ausgangsbereich 144 lediglich geringer aus als beispielsweise bei dem Ausführungsbeispiel nach Figur 7.

Darüber hinaus zeigt Figur 9 eine Variante, bei welcher die Verbindungseinrichtung 56, welche das Fahrwerk 40 des Transportwagens 34 mit der Befestigungseinrichtung 50 koppelt, mit Streben 58 ausgestattet ist, die einen C-förmigen Abschnitt 90 umfassen, wie es bereits bei dem Ausführungsbeispiel nach Figur 3 beschrieben wurde. Beim hier gezeigten Ausführungsbeispiel sind diese Verbindungseinrichtung 56 und die Dimensionen und Anordnungen des Gasraum-Gehäuses 68 und der Verbindungsdurchgänge 70, 72 so aneinander angepasst, dass sich ein vertikaler Abschnitt 58a der Strebe 58, der das Fahrwerk 40 mit dem C-förmigen Abschnitt 90 verbindet, durch den zweiten Verbindungsdurchgang 72 zwischen Fahrraum 64 und Gasraum 66 erstreckt. Ein in Figur 9 mit 90a bezeichneter vertikaler Abschnitt des C-förmigen Abschnitts 90 erstreckt sich durch den ersten Verbindungsdurchgang 70. Die Verbindungsdurchgänge 70 und 72 verlaufen dementsprechend bezogen auf die Förderrichtung der Werkstücke 12 seitlich zueinander versetzt.

Diese Ausbildung kann auch bei dem Trockner 28 von Vorteil sein, da die Gasbarriere 78 gegenüber den anderen Ausführungsbeispielen verhältnismäßig lange an der Verbindungseinrichtung 56 entlang strömt und Wärme von der Verbindungseinrichtung 56 abgeführt wird.

Beim Ausführungsbeispiel nach Figur 10 wird der Strömungsweg 136 der Gasbarriere 78 durch die Strömungsleitelemente 148 im Gasraum 66 in einen ersten Strömungsteilweg 136a und einen zweiten Strömungsteilweg 136b aufgeteilt, wobei der erste Strömungsteilweg 136a an dem ersten Verbindungsdurchgang 70 und der zweite Strömungsweg 136b an dem zweiten Verbindungsdurchgang 72 vorbeiführt.

Bei dem in Figur 11 gezeigten Ausführungsbeispiel ist die Strömungsleiteinrichtung 146 derart eingerichtet, dass Gas der Gasbarriere 78 an dem ersten Verbindungsdurchgang 70 und an dem zweiten Verbindungsdurchgang 72 mit entgegengesetzten Strömungsrichtungen vorbei strömt. Der Gasraum 66 ist derart eingerichtet, dass der nach dem Gegenstromprinzip von der Gasbarriere 78 durchströmt werden kann.

Hierfür ist der Gasraum 66 mit Hilfe von Zwischenwänden 156 in einen dem ersten Verbindungsdurchgang 70 zugewandten ersten Strömungsbereich 158 und einen dem zweiten Verbindungsdurchgang 72 zugewandten zweiten Strömungsbereich 160 unterteilt.

Bei einer ersten Variante sind jedem Strömungsbereich 158, 160 auf gegenüberliegenden Seiten einer oder mehrere Gaseinlässe 132 und einer oder mehrere Gasauslässe 134 derart zugeordnet, dass die Strömungsbereiche 158, 160 unabhängig von der Gas-Versorgungseinrichtung 76 mit Gas für die Gasbarriere 78 versorgt werden können.

Bei einer zweiten Variante sind die beiden Strömungsbereiche 158, 160 durch eine Umlenkeinrichtung 162, insbesondere durch einen oder mehrere Umlenkkanäle, miteinander verbunden. Auf diese Weise strömt Gas für die Gasbarriere 78 beispielsweise in den ersten Strömungsbereich 158 hinein, durchströmt diesen in einer ersten Strömungsrichtung, wird durch die Umlenkeinrichtung 162 in den zweiten Strömungsbereich 160 umgelenkt, den das Gas dann in entgegengesetzter Richtung durchströmt und durch vorhandene Gasauslässe 134 verlässt.

Bei einer weiteren, nicht eigens gezeigten Variante können die Strömungsbereiche 158, 160 auf beiden Seiten durch eine jeweilige Umlenkeinrichtung 162 verbunden sein, so dass die Gasbarriere 78 in einem Kreislauf strömen kann. Gegebenenfalls auftretende Gasverluste werden durch die Gas-Versorgungseinrichtung 76 kompensiert, indem entsprechende Volumina zum Gasraum 66 geführt werden.

Bei allen Ausführungsbeispielen der Beschichtungseinrichtung 102 mit dem vom Eingangsbereich 142 zum Ausgangsbereich 144 durchströmten Gasraum 66 kann es auf Grund des Venturi-Effektes dazu kommen, dass mit Overspray beladene Tunnelatmosphäre aus dem Beschichtungstunnel 104 durch den ersten Verbindungsdurchgang 70 in den Gasraum 66 hinein gesaugt wird. Auf diese Weise wird das Gas der Gasbarriere 78 mit Tunnelatmosphäre und insbesondere mit Overspray kontaminiert.

Wenn dies der Fall ist, können die eine oder mehreren Gasabführleitungen 140 zum Beispiel in den Abscheidebereich 118 der Beschichtungseinrichtung 102 führen, wo sich das mit Overspray beladene Gas mit der Kabinenluft vermischen und dann zur Abscheidevorrichtung 116 gelangen kann.

Neben den oben beschriebenen Strömungsleitelementen 148 können ergänzend oder alternativ Klappen, Ventile und/oder Gebläse vorgesehen sein, mit deren Hilfe der Volumenstrom der Gasbarriere 78 und/oder der Druck der Gasbarriere 78 in dem Gasraum 66 eingestellt werden kann.

Die Strömungsverhältnisse der Gasbarriere 78 im Gasraum 66, der Tunnelatmosphäre in dem Behandlungstunnel 20 und der Atmosphäre in dem Fahrraum 64 können auf verschiedene Art und Weise aufeinander abgestimmt werden, so dass verschiedene Effekte erreicht werden können. Einerseits kann die Gasbarriere 78 so ausgelegt sein, dass es an keinem Verbindungsdurchgang 70 oder 72 zu einem Ausströmen vom Gas der Gasbarriere 78 in den Behandlungstunnel 20 oder den Fahrraum 64 und zu keinem Eintreten von Tunnelatmosphäre aus dem Behandlungstunnel 20 oder Atmosphäre aus dem Fahrraum 64 in den Gasraum 66 kommt. Alternativ kann dafür gesorgt werden, dass ein Teil des Gases der Gasbarriere 78 in den Behandlungstunnel 20 und/oder in den Fahrraum 64 austreten kann. Auch können die Strömungsverhältnisse so eingestellt werden, dass Tunnelatmosphäre aus dem Behandlungstunnel 20 und/oder Atmosphäre aus dem Fahrraum 64 in den Gasraum 66 eintreten kann.

Auch Mischvarianten sind also möglich. Beispielsweise kann Gas der Gasbarriere 78 durch den ersten Verbindungsdurchgang 70 in den Behandlungstunnel 20 strömen und Atmosphäre aus dem Fahrraum 64 durch den zweiten Verbindungsdurchgang 72 in den Gasraum 66 eintreten.

Strömungsverluste insbesondere am Anfang und am Ende des Behandlungstunnels 20 können gegebenenfalls durch entsprechende Schleusen oder durch eine Anpassung der Drücke und oder der zur Verfügung gestellten Volumenströme eingestellt werden. Eine Anpassung des Druckes und/oder des Volumenstromes des Gases für die Gasbarriere 78 kann gegebenenfalls lokal unterschiedlich erfolgen und muss nicht über die Länge des Gasraumes 66 in Förderrichtung der Werkstücke 12 einheitlich sein. So können für unterschiedliche Zonen im Behandlungstunnel 20 verschiedene Verhältnisse von Druck und/oder Volumenstrom erforderlich sein. Die benötigten Verhältnisse müssen an Anlagenparameter angepasst werden, zu denen unter anderem die Temperaturen, die herrschenden Drücke und die Feuchtigkeit zählen können, die in benachbarten Raumbereichen, d.h. in einem Bereich des Fahrraumes 64, einem diesem Bereich benachbarter Bereich des Gasraumes 66 und einem wieder diesem Bereich benachbarter Bereich des Behandlungstunnels 20 herrschen.

Bei einem Trockner 28 werden in der Praxis die Alternativen gewählt, bei der die Gasbarriere 78 weitgehend ohne Atmosphärenaustausch an den Verbindungsdurchgängen 70, 72 vorbeiströmt oder zumindest durch den ersten Verbindungsdurchgang 70 in den Trockentunnel 30 und gegebenenfalls auch durch den zweiten Verbindungsdurchgang 72 in den Fahrraum 64 einströmen kann. Auf diese Weise ist sichergestellt, dass die belastende Tunnelatmosphäre des Trockentunnels 30 nicht in den Fahrraum gelangen kann.

Bei der Beschichtungseinrichtung 102 wird in der Praxis eher die oben erläuterte Variante bevorzugt, bei welcher zumindest auf dem Weg über den ersten Verbindungsdurchgang 70 ein Überströmen der Tunnelatmosphäre aus dem Beschichtungstunnel 104 in den Gasraum 66 möglich ist. So werden möglicherweise unerwünschte Verunreinigungen, die das Gas für die Gasbarriere 78 mit sich führt, von dem Beschichtungstunnel 104 ferngehalten.

## Patentansprüche

1. Behandlungsanlage zum Behandeln von Werkstücken (12), insbesondere zum Beschichten und/oder Trocknen von Fahrzeugkarosserien (14), mit
a) einer Behandlungseinrichtung (16) mit einem Gehäuse (18), in dem ein Behandlungstunnel (20) untergebracht ist;
b) einem Fördersystem (32), welches eine Vielzahl von Transportwagen (34) umfasst, mittels denen die Werkstücke (12) durch den Behandlungstunnel (20) förderbar sind, wobei jeder Transportwagen (34) ein Fahrwerk (40) und eine Befestigungseinrichtung (50) für zumindest ein Werkstück (12) umfasst, die mittels einer Verbindungseinrichtung (56) miteinander gekoppelt sind;
wobei
c) außerhalb des Behandlungstunnels (20) ein Führungsbereich (62) mit einem Fahrraum (64) für das Fahrwerk (40) vorhanden ist,
**dadurch gekennzeichnet, dass**
d) in dem Führungsbereich (62) ein Gasraum (66) ausgebildet ist, der zwischen dem Fahrraum (64) und dem Behandlungstunnel (20) angeordnet und durch ein gesondertes Gehäuse (68) begrenzt ist;
e) eine Gas-Versorgungseinrichtung (76) vorhanden ist, mittels welcher dem Gasraum (66) ein Gas derart zuführbar ist, dass in dem Gasraum (66) eine Gasbarriere (78) zwischen dem Behandlungstunnel (20) und dem Fahrraum (64) erzeugt wird.

2. Behandlungsanlage nach Anspruch 1, **dadurch gekennzeichnet, dass** der Gasraum (66) über einen ersten Verbindungsdurchgang (70) mit dem Behandlungstunnel (20) und über einen zweiten Verbindungsdurchgang (72) mit dem Fahrraum (64) verbunden ist, derart, dass das Fahrwerk (40) eines Transportwagens (34) in dem Fahrraum (64) bewegbar ist und dabei die Befestigungseinrichtung (50) im Behandlungstunnel (20) mitgeführt wird und sich die Verbindungseinrichtung (56) durch den ersten und den zweiten Verbindungsdurchgang (70, 72) und den Gasraum (66) hindurch erstreckt.

3. Behandlungsanlage nach Anspruch 2, **dadurch gekennzeichnet, dass** der erste Verbindungsdurchgang (70) und/oder der zweite Verbindungsdurchgang (72) geradlinig oder gewinkelt ist.

4. Behandlungsanlage nach Anspruch 2 oder 3, **dadurch gekennzeichnet, dass** mittels der Gas-Versorgungseinrichtung (76) in dem Gasraum (66) ein Druck erzeugbar ist, der gegenüber dem Druck im Behandlungstunnel (20) und/oder gegenüber dem Druck im Fahrraum (64) erhöht ist.

5. Behandlungsanlage nach einem der Ansprüche 1 bis 4, **dadurch gekennzeichnet, dass** der Gasraum (66) als Durchströmungsraum ausgebildet ist, wobei das Gasraum-Gehäuse (68) zu diesem Zweck einen oder mehrere Gaseinlässe (132) und einen oder mehrere Gasauslässe (134) umfasst.

6. Behandlungsanlage nach Anspruch 5, **dadurch gekennzeichnet, dass** die Gas-Versorgungseinrichtung (76) derart eingerichtet ist, dass dem Gasraum (66) durch einen oder mehrere Gaseinlässe (132) Gas für die Gasbarriere (78) zugeführt wird, welches den Gasraum (66) auf einem Strömungsweg (136) durchströmt und dabei in dem Gasraum (66) zumindest zum Teil und zumindest bereichsweise an dem ersten Verbindungsdurchgang (70) und/oder an dem zweiten Verbindungsdurchgang (72) vorbei strömt und hiernach durch einen oder mehrere Gasauslässe (134) von dem Gasraum (66) abgeführt wird.

7. Behandlungsanlage nach Anspruch 6, **dadurch gekennzeichnet, dass** die Gasbarriere (78) über die volle Längserstreckung des ersten Verbindungsdurchgangs (70) und/oder des zweiten Verbindungsdurchgangs (72) zumindest zum Teil an diesen vorbei strömt.

8. Behandlungsanlage nach einem der Ansprüche 1 bis 7, **dadurch gekennzeichnet, dass** der Gasraum (66) eine Strömungsleiteinrichtung (146) umfasst, mittels welcher der Strömungsquerschnitt für die Gasbarriere (78) verringert wird, bevor Gas der Gasbarriere (78) an dem ersten Verbindungsdurchgang (70) und/oder dem zweiten Verbindungsdurchgang (72) vorbeiströmt.

9. Behandlungsanlage nach Anspruch 8, **dadurch gekennzeichnet, dass** die Strömungsleiteinrichtung (146) Strömungsleitelemente (148) umfasst.

10. Behandlungsanlage nach einem der Ansprüche 5 bis 9, **dadurch gekennzeichnet, dass** der Gasraum (66) derart eingerichtet ist, dass dieser im Gegenstromprinzip von der Gasbarriere (78) durchströmbar ist, so dass Gas der Gasbarriere (78) an dem ersten Verbindungsdurchgang (70) und an dem zweiten Verbindungsdurchgang (72) mit entgegengesetzten Strömungsrichtungen vorbei strömt.

11. Behandlungsanlage nach einem der Ansprüche 1 bis 10, **dadurch gekennzeichnet, dass** die Gas-Versorgungseinrichtung (76) eine Konditioniereinrichtung (80) umfasst, mittels welcher das dem Gasraum (66) zuzuführende Gas konditioniert werden kann.

12. Behandlungsanlage nach einem der Ansprüche 1 bis 11, **dadurch gekennzeichnet, dass** der Führungsbereich (62) mit dem Fahrraum (64) und dem Gasraum (66) unterhalb zumindest eines Abschnitts einer Tunnelwand (26; 124) des Behandlungstunnels (20) ausgebildet ist.

13. Behandlungsanlage nach einem der Ansprüche 1 bis 12, **dadurch gekennzeichnet, dass** die Verbindungseinrichtung (56) wenigstens eine vertikale Strebe (58), insbesondere eine Gelenkstrebe (60) umfasst.

14. Verfahren zum Behandeln von Werkstücken (12), insbesondere zum Beschichten und/oder Trocknen von Fahrzeugkarosserien (14), umfassend
das Hindurchführen von Werkstücken (12) durch einen Behandlungstunnel (20) mittels eines Fördersystems (32), welches eine Vielzahl von Transportwagen (34) umfasst, mittels denen die Werkstücke (12) durch den Behandlungstunnel (20) gefördert werden, wobei jeder Transportwagen (34) ein Fahrwerk (40) und eine Befestigungseinrichtung (50) für zumindest ein Werkstück (12) umfasst, die mittels einer Verbindungseinrichtung (56) miteinander gekoppelt sind, und wobei außerhalb des Behandlungstunnels (20) ein Führungsbereich (62) mit einem Fahrraum (64) für das Fahrwerk (40) vorhanden ist,
**dadurch gekennzeichnet, dass**
einem Gasraum (66), der in dem Führungsbereich (62) zwischen dem Fahrraum (64) und dem Behandlungstunnel (20) angeordnet und durch ein gesondertes Gehäuse (68) begrenzt ist, ein Gas derart zugeführt wird, dass in dem Gasraum (66) eine Gasbarriere (78) zwischen dem Behandlungstunnel (20) und dem Fahrraum (64) erzeugt wird.

15. Verfahren nach Anspruch 14, **dadurch gekennzeichnet, dass** der Gasraum (66) über einen ersten Verbindungsdurchgang (70) mit dem Behandlungstunnel (20) und über einen zweiten Verbindungsdurchgang (72) mit dem Fahrraum (64) verbunden ist, wobei das Fahrwerk (40) eines Transportwagens (34) in dem Fahrraum (64) bewegt wird und dabei die Befestigungseinrichtung (50) im Behandlungstunnel (20) mitgeführt wird und sich die Verbindungseinrichtung (56) durch den ersten und den zweiten Verbindungsdurchgang (70, 72) und den Gasraum (66) hindurch erstreckt.

16. Verfahren nach Anspruch 14 oder 15, **dadurch gekennzeichnet, dass** in dem Gasraum (66) ein Druck erzeugt wird, der gegenüber dem Druck im Behandlungstunnel (20) und/oder gegenüber dem Druck im Fahrraum (64) erhöht ist.

17. Verfahren nach einem der Ansprüche 14 bis 16, **dadurch gekennzeichnet, dass** der Gasraum (66) als Durchströmungsraum ausgebildet ist, wobei das Gasraum-Gehäuse (68) zu diesem Zweck einen oder mehrere Gaseinlässe (132) und einen oder mehrere Gasauslässe (134) umfasst.

18. Verfahren nach Anspruch 17, **dadurch gekennzeichnet, dass** dem Gasraum (66) durch einen oder mehrere Gaseinlässe (132) Gas für die Gasbarriere (78) zugeführt wird, welches den Gasraum (66) auf einem Strömungsweg (136) durchströmt und dabei in dem Gasraum (66) zumindest zum Teil und zumindest bereichsweise an dem ersten Verbindungsdurchgang (70) und/oder an dem zweiten Verbindungsdurchgang (72) vorbei strömt und hiernach durch einen oder mehrere Gasauslässe (134) von dem Gasraum (66) abgeführt wird.

19. Verfahren nach Anspruch 18, **dadurch gekennzeichnet, dass** die Gasbarriere (78) über die volle Längserstreckung des ersten Verbindungsdurchgangs (70) und/oder des zweiten Verbindungsdurchgangs (72) zumindest zum Teil an diesen vorbei strömt.

20. Verfahren nach einem der Ansprüche 1 bis 19, **dadurch gekennzeichnet, dass** der Strömungsquerschnitt für die Gasbarriere (78) mittels einer Strömungsleiteinrichtung (146) verringert wird, bevor Gas der Gasbarriere (78) an dem ersten Verbindungsdurchgang (70) und/oder dem zweiten Verbindungsdurchgang (72) vorbeiströmt.

21. Verfahren nach Anspruch 20, **dadurch gekennzeichnet, dass** die Strömungsleiteinrichtung (146) Strömungsleitelemente (148) umfasst.

22. Verfahren nach einem der Ansprüche 14 bis 21, **dadurch gekennzeichnet, dass** der Gasraum (66) im Gegenstromprinzip von der Gasbarriere (78) durchströmt wird, so dass Gas der Gasbarriere (78) an dem ersten Verbindungsdurchgang (70) und an dem zweiten Verbindungsdurchgang (72) mit entgegengesetzten Strömungsrichtungen vorbei strömt.

23. Verfahren nach einem der Ansprüche 14 bis 22, **dadurch gekennzeichnet, dass** das dem Gasraum (66) zuzuführende Gas mittels einer Konditioniereinrichtung (80) konditioniert wird.

24. Verfahren nach einem der Ansprüche 14 bis 23, **dadurch gekennzeichnet, dass** der Führungsbereich (62) mit dem Fahrraum (64) und dem Gasraum (66) unterhalb zumindest eines Abschnitts einer Tunnelwand (26; 124) des Behandlungstunnels (20) ausgebildet ist.

## Claims

1. Treatment installation for treating workpieces (12), in particular for coating and/or drying of vehicle bodies (14), with
a) a treatment device (16) with a housing (18), in which a treatment tunnel (20) is accommodated;
b) a conveyor system (32), comprising a plurality of trolleys (34), by means of which the workpieces (12) are transportable through the treatment tunnel (20), wherein each trolley (34) comprises a chassis (40) and a securing device (50) for at least one workpiece (12), which are coupled together by means of a coupling device (56);
wherein
c) outside the treatment tunnel (20) a guidance zone (62) with a driving area (64) for the chassis is present,
**characterised in that**
d) in the guidance zone (62) a gas compartment (66) is configured, arranged between driving area (64) and the treatment tunnel (20) and delimited by a separate housing (68);
e) a gas-supply device (76) is present, by means of which the gas compartment (66) can be supplied with a gas such that in the gas compartment (66) a gas barrier (78) is created between the treatment tunnel (20) and the driving area (64).

2. Treatment installation according to Claim 1, **characterised in that** the gas compartment (66) is connected via a first connecting passage (70) with the treatment tunnel (20) and via a second connecting passage (72) with the driving area (64), such that the chassis (40) of a trolley in the driving area (64) is movable and in the process the securing device (50) is also taken into the treatment tunnel (20) and the coupling device (56) extends through the first and the second connecting passage (70, 72) and the gas compartment (66).

3. Treatment installation according to Claim 2, **characterised in that** the first connecting passage (70) and/or the second connecting passage (72) is or are straight or angled.

4. Treatment installation according to Claim 2 or 3, **characterised in that** by means of the gas supply device (76) a pressure can be developed in the gas compartment (66), which is greater than the pressure in the treatment tunnel (20) and/or than the pressure in the driving area (64).

5. Treatment installation according to any one of Claims 1 to 4, **characterised in that** the gas compartment (66) is configured as a flow compartment, wherein the gas compartment housing (68) to this end comprises one or more gas inlets (132) and one or more gas outlets (134).

6. Treatment installation according to Claim 5, **characterised in that** the gas supply device (76) is arranged such that the gas compartment (66) is supplied through one or more gas inlets (132) with gas for the gas barrier (78), which flows through the gas compartment (66) along a flow path (136) and in doing so in the gas compartment (66) at least in part and at least in certain areas flows past the first connecting passage (70) and/or the second connecting passage (72) and thereafter is discharged through one or more gas outlets (134) from the gas compartment (66).

7. Treatment installation according to Claim 6, **characterised in that** the gas barrier (78) over the full longitudinal extension of the first connecting passage (70) and/or the second connecting passage (72) flows at least in part past these.

8. Treatment installation according to any one of Claims 1 to 7, **characterised in that** the gas compartment (66) comprises a flow guiding device (146), by means of which the flow section for the gas barrier (78) is reduced, before gas of the gas barrier (78) flows past the first connecting passage (70) and/or the second connecting passage (72).

9. Treatment installation according to Claim 8, **characterised in that** the flow guiding device (146) comprises flow guiding elements (148).

10. Treatment installation according to any one of Claims 5 to 9, **characterised in that** the gas compartment (66) is arranged such that the gas barrier (78) is able to flow through it according to the counter current principle, so that gas of the gas barrier (78) flows past the first connecting passage (70) and past the second connecting passage (72) in opposing flow directions.

11. Treatment installation according to any one of Claims 1 to 10, **characterised in that** the gas supply device (76) comprises a conditioning device (80), by means of which the gas to be supplied to the gas compartment (66) can be conditioned.

12. Treatment installation according to any one of Claims 1 to 11, **characterised in that** the guidance zone (62) with the driving area (64) and the gas compartment (66) is configured below at least a section of a tunnel wall (26; 124) of the treatment tunnel (20).

13. Treatment installation according to any one of Claims 1 to 12, **characterised in that** the coupling device (56) comprises at least one vertical strut (58), in particular an articulated strut (60).

14. Method for treating workpieces (12), in particular for coating and/or drying vehicle bodies (14), comprising
the passing of workpieces (12) through a treatment tunnel (20) by means of a conveyor system (32), comprising a plurality of trolleys (34), by means of which the workpieces (12) are conveyed through the treatment tunnel (20), wherein each trolley (34) comprises a chassis (40) and a securing device (50) for at least one workpiece (12), which are coupled together by means of a coupling device (56), and wherein outside the treatment tunnel (20) a guidance zone (62) with a driving area (64) for the chassis (40) is present
**characterised in that**
a gas compartment (66), arranged in the guidance zone (62) between the driving area (64) and the treatment tunnel (20) and delimited by a separate housing (68), is supplied with a gas such that in the gas compartment (66) a gas barrier (78) is created between the treatment tunnel (20) and the driving area (64).

15. Method according to Claim 14, **characterised in that** the gas compartment (66) is connected via a first connecting passage (70) with the treatment tunnel (20) and via a second connecting passage (72) with the driving area (64), wherein the chassis (40) of a trolley (34) in the driving area is movable and in the process the securing device (50) is also taken into the treatment tunnel (20) and the coupling device (56) extends through the first and the second connecting passage (70, 72) and the gas compartment (66).

16. Method according to Claim 14 or 15, **characterised in that** in the gas compartment (66) a pressure is developed, that is higher than the pressure in the treatment tunnel (20) and/or the pressure in the driving area (64).

17. Method according to any one of Claims 14 to 16, **characterised in that** the gas compartment (66) is configured as a flow compartment, wherein the gas compartment housing (68) to this end comprises one or more gas inlets (132) and one or more gas outlets (134).

18. Method according to Claim 17, **characterised in that** the gas compartment (66) is supplied by one or more gas inlets (132) with gas for the gas barrier (78), which flows through the gas compartment (66) along a flow path (136) and in doing so in the gas compartment (66) at least in part and at least in certain areas flows past the first connecting passage (70) and/or the second connecting passage (72) and thereafter is discharged through one or more gas outlets (134) from the gas compartment (66).

19. Method according to Claim 18, **characterised in that** over the full longitudinal extension of the first connecting passage (70) and/or the second connecting passage (72) the gas barrier flows (78) flows at least in part past these.

20. Method according to any one of Claims 1 to 19, **characterised in that** the flow section for the gas barrier (78) is reduced, before gas of the gas barrier (78) flows past the first connecting passage (70) and/or the second connecting passage (72), by means of a flow guiding device (146).

21. Method according to Claim 20, **characterised in that** the flow guiding device comprises flow guiding elements (148).

22. Method according to any one of Claims 14 to 21, **characterised in that** the gas barrier (78) is able to flow through the gas compartment (66) according to the counter current principle, so that gas of the gas barrier (78) flows past the first connecting passage (70) and past the second connecting passage (72) in opposing flow directions.

23. Method according to any one of Claims 14 to 22, **characterised in that** the gas to be supplied to the gas compartment (66) is conditioned by means of a conditioning device (80).

24. Method according to any one of Claims 14 to 23, **characterised in that** the guidance zone (62) with the driving area (64) and the gas compartment (66) is configured below at least a section of a tunnel wall (26; 124) of the treatment tunnel (20).

## Revendications

1. Installation de manipulation pour la manipulation de pièces à usiner (12), notamment pour l'enduction et/ou le séchage de carrosseries de véhicule (14), avec
a) un dispositif de manipulation (16) avec un logement (18) dans lequel un tunnel de manipulation (20) est hébergé ;
b) un système de transport (32) qui comprend une pluralité de wagons de transport (34) au moyen desquels les pièces à usiner (12) peuvent être transportées à travers le tunnel de manipulation (20), dans laquelle chaque wagon de transport (34) comprend un mécanisme de roulement (40) et un dispositif de fixation (50) pour au moins une pièce à usiner (12) qui sont attelés l'un à l'autre au moyen d'un dispositif de connexion (56) ;
dans laquelle
c) une région de guidage (62) avec un espace de déplacement (64) pour le mécanisme de roulement (40) est présente en dehors du tunnel de manipulation (20),
**caractérisée en ce que**
d) un espace gazeux (66) qui est disposé entre l'espace de déplacement (64) et le tunnel de manipulation (20) et limité par un logement séparé (68) est réalisé dans la région de guidage (62) ;
e) un dispositif d'alimentation en gaz (76) est présent, au moyen duquel un gaz peut être acheminé à l'espace gazeux (66) de telle sorte qu'une barrière gazeuse (78) entre le tunnel de manipulation (20) et l'espace de déplacement (64) est générée dans l'espace gazeux (66).

2. Installation de manipulation selon la revendication 1, **caractérisée en ce que** l'espace gazeux (66) est connecté au tunnel de manipulation (20) par le biais d'un premier passage de connexion (70) et à l'espace de déplacement (64) par le biais d'un second passage de connexion (72) de telle sorte que le mécanisme de roulement (40) d'un wagon de transport (34) peut être déplacé dans l'espace de déplacement (64), et le dispositif de fixation (50) est ce faisant entraîné dans le tunnel de manipulation (20) et le dispositif de connexion (56) s'étend à travers le premier et le second passage de connexion (70, 72) et l'espace gazeux (66).

3. Installation de manipulation selon la revendication 2, **caractérisée en ce que** le premier passage de connexion (70) et/ou le second passage de connexion (72) est en ligne droite ou coudé.

4. Installation de manipulation selon la revendication 2 ou 3, **caractérisée en ce qu'**une pression qui est augmentée par rapport à la pression dans le tunnel de manipulation (20) et/ou par rapport à la pression dans l'espace de déplacement (64) peut être générée dans l'espace gazeux (66) au moyen du dispositif d'alimentation en gaz (76).

5. Installation de manipulation selon une des revendications 1 à 4, **caractérisée en ce que** l'espace gazeux (66) est réalisé en tant qu'espace d'écoulement, dans laquelle le logement d'espace gazeux (68) comprend à cette fin une ou plusieurs entrées gazeuses (132) et une ou plusieurs sorties gazeuses (134).

6. Installation de manipulation selon la revendication 5, **caractérisée en ce que** le dispositif d'alimentation en gaz (76) est configuré de telle sorte que du gaz pour la barrière gazeuse (78), qui parcourt l'espace gazeux (66) sur un trajet d'écoulement (136) et s'écoule ce faisant dans l'espace gazeux (66) au moins en partie et au moins par régions le long du premier passage de connexion (70) et/ou du second passage de connexion (72) et est évacué ci-après de l'espace gazeux (66) à travers une ou plusieurs sorties gazeuses (134), est acheminé à l'espace gazeux (66) à travers une ou plusieurs entrées gazeuses (132).

7. Installation de manipulation selon la revendication 6, **caractérisée en ce que** la barrière gazeuse (78) s'écoule sur l'étendue longitudinale entière du premier passage de connexion (70) et/ou du second passage de connexion (72) au moins en partie le long de celui-ci.

8. Installation de manipulation selon une des revendications 1 à 7, **caractérisée en ce que** l'espace gazeux (66) comprend un dispositif de direction d'écoulement (146) au moyen duquel la section transversale d'écoulement pour la barrière gazeuse (78) est réduite avant que du gaz de la barrière gazeuse (78) ne s'écoule le long du premier passage de connexion (70) et/ou du second passage de connexion (72).

9. Installation de manipulation selon la revendication 8, **caractérisée en ce que** le dispositif de direction d'écoulement (146) comprend des éléments de direction d'écoulement (148).

10. Installation de manipulation selon une des revendications 5 à 9, **caractérisée en ce que** l'espace gazeux (66) est configuré de telle sorte que celui-ci peut être parcouru par la barrière gazeuse (78) dans le principe du contre-courant de sorte du gaz de la barrière gazeuse (78) s'écoule le long du premier passage de connexion (70) et du second passage de connexion (72) avec des directions d'écoulement opposées.

11. Installation de manipulation selon une des revendications 1 à 10, **caractérisée en ce que** le dispositif d'alimentation en gaz (76) comprend un dispositif de conditionnement (80) au moyen duquel le gaz à acheminer à l'espace gazeux (66) peut être conditionné.

12. Installation de manipulation selon une des revendications 1 à 11, **caractérisée en ce que** la région de guidage (62) avec l'espace de déplacement (64) et l'espace gazeux (66) est réalisée en dessous d'au moins une section d'une paroi de tunnel (26 ; 124) du tunnel de manipulation (20).

13. Installation de manipulation selon une des revendications 1 à 12, **caractérisée en ce que** le dispositif de connexion (56) comprend au moins une potence verticale (58), notamment une potence articulée (60).

14. Procédé de manipulation de pièces à usiner (12), notamment d'enduction et/ou de séchage de carrosseries de véhicule (14), comprenant
le passage de pièces à usiner (12) à travers un tunnel de manipulation (20) au moyen d'un système de transport (32) qui comprend une pluralité de wagons de transport (34) au moyen desquels les pièces à usiner (12) sont transportées à travers le tunnel de manipulation (20), dans lequel chaque wagon de transport (34) comprend un mécanisme de roulement (40) et un dispositif de fixation (50) pour au moins une pièce à usiner (12) qui sont attelés l'un à l'autre au moyen d'un dispositif de connexion (56), et dans lequel une région de guidage (62) avec un espace de déplacement (64) pour le mécanisme de roulement (40) est présente en dehors du tunnel de manipulation (20),
**caractérisé en ce que**
un gaz est acheminé à un espace gazeux (66) qui est disposé dans la région de guidage (62) entre l'espace de déplacement (64) et le tunnel de manipulation (20) et limité par un logement séparé (68) de telle sorte qu'une barrière gazeuse (78) est générée dans l'espace gazeux (66) entre le tunnel de manipulation (20) et l'espace de déplacement (64).

15. Procédé selon la revendication 14, **caractérisé en ce que** l'espace gazeux (66) est connecté au tunnel de manipulation (20) par le biais d'un premier passage de connexion (70) et à l'espace de déplacement (64) par le biais d'un second passage de connexion (72), dans lequel le mécanisme de roulement (40) d'un wagon de transport (34) est déplacé dans l'espace de déplacement (64), et le dispositif de fixation (50) est ce faisant entraîné dans le tunnel de manipulation (20) et le dispositif de connexion (56) s'étend à travers le premier et le second passage de connexion (70, 72) et l'espace gazeux (66).

16. Procédé selon la revendication 14 ou 15, **caractérisé en ce qu'**une pression qui est augmentée par rapport à la pression dans le tunnel de manipulation (20) et/ou par rapport à la pression dans l'espace de déplacement (64) est générée dans l'espace gazeux (66).

17. Procédé selon une des revendications 14 à 16, **caractérisé en ce que** l'espace gazeux (66) est réalisé en tant qu'espace d'écoulement, dans lequel le logement d'espace gazeux (68) comprend à cette fin une ou plusieurs entrées gazeuses (132) et une ou plusieurs sorties gazeuses (134).

18. Procédé selon la revendication 17, **caractérisé en ce que** du gaz pour la barrière gazeuse (78), qui parcourt l'espace gazeux (66) sur un trajet d'écoulement (136) et s'écoule ce faisant dans l'espace gazeux (66) au moins en partie et au moins par régions le long du premier passage de connexion (70) et/ou du second passage de connexion (72) et est évacué ci-après de l'espace gazeux (66) à travers une ou plusieurs sorties gazeuses (134), est acheminé à l'espace gazeux (66) à travers une ou plusieurs entrées gazeuses (132).

19. Procédé selon la revendication 18, **caractérisé en ce que** la barrière gazeuse (78) s'écoule sur l'étendue longitudinale entière du premier passage de connexion (70) et/ou du second passage de connexion (72) au moins en partie le long de celui-ci.

20. Procédé selon une des revendications 1 à 19, **caractérisé en ce que** la section transversale d'écoulement pour la barrière gazeuse (78) est réduite au moyen d'un dispositif de direction d'écoulement (146) avant que du gaz de la barrière gazeuse (78) ne s'écoule le long du premier passage de connexion (70) et/ou du second passage de connexion (72).

21. Procédé selon la revendication 20, **caractérisé en ce que** le dispositif de direction d'écoulement (146) comprend des éléments de direction d'écoulement (148).

22. Procédé selon une des revendications 14 à 21, **caractérisé en ce que** l'espace gazeux (66) est parcouru par la barrière gazeuse (78) dans le principe du contre-courant de sorte du gaz de la barrière gazeuse (78) s'écoule le long du premier passage de connexion (70) et du second passage de connexion (72) avec des directions d'écoulement opposées.

23. Procédé selon une des revendications 14 à 22, **caractérisé en ce que** le gaz à acheminer à l'espace gazeux (66) est conditionné au moyen d'un dispositif de conditionnement (80).

24. Procédé selon une des revendications 14 à 23, **caractérisé en ce que** la région de guidage (62) avec l'espace de déplacement (64) et l'espace gazeux (66) est réalisée en dessous d'au moins une section d'une paroi de tunnel (26 ; 124) du tunnel de manipulation (20).
